# EUROPEAN PATENT SPECIFICATION

(11) **EP 4 442 180 B1**
(45) Date of publication and mention of the grant of the patent: **31.12.2025**
(21) Application number: 23799565.9
(22) Date of filing: 20.03.2023
(51) Int. Cl.: G05D 1/24, A47L 11/40, B25J 11/00, B25J 9/16, B25J 19/02, G05D 1/648, G05D 105/10, G05D 107/40, G05D 109/10, G05D 111/10, G05D 111/50

(54) **METHOD OF CONTROLLING A DRIVING ROBOT APPARATUS, DRIVING ROBOT APPARATUS, AND RECORDING MEDIUM HAVING COMPUTER PROGRAM RECORDED THEREON**
VERFAHREN ZUR STEUERUNG EINER FAHRROBOTERVORRICHTUNG, FAHRROBOTERVORRICHTUNG UND AUFZEICHNUNGSMEDIUM MIT DARAUF AUFGEZEICHNETEM COMPUTERPROGRAMM
PROCÉDÉ DE COMMANDE D'UN APPAREIL ROBOT MOBILE, APPAREIL ROBOT MOBILE, ET SUPPORT D'ENREGISTREMENT PORTANT UN PROGRAMME INFORMATIQUE ENREGISTRÉ DESSUS

(30) Priority: 04.05.2022 KR 20220055723
(43) Date of publication of application: 09.10.2024
(73) Proprietor: Samsung Electronics Co., Ltd., Suwon-si, Gyeonggi-do 16677 (KR)
(72) Inventor: SO, Jeayun, Suwon-si, Gyeonggi-do 16677 (KR); KIM, Bosang, Suwon-si, Gyeonggi-do 16677 (KR); KIM, Jinhee, Suwon-si, Gyeonggi-do 16677 (KR); RYU, Minwoo, Suwon-si, Gyeonggi-do 16677 (KR); YOON, Sangsik, Suwon-si, Gyeonggi-do 16677 (KR); JEONG, Yeonkyu, Suwon-si, Gyeonggi-do 16677 (KR)
(74) Representative: Walaski, Jan Filip
(86) International application number: PCT/KR2023/003646
(87) International publication number: WO 2023/214682

(56) References cited:
- WO-A1-2021/040161
- WO-A1-2022/005067
- KR-A- 20210 015 123
- KR-A- 20210 023 649
- KR-A- 20210 036 736
- KR-A- 20220 031 589
- KR-B1- 102 011 827
- US-A1- 2021 177 226
- US-A1- 2022 287 532
- US-A1- 2023 255 430

## Description

### TECHNICAL FIELD

The disclosure relates to a driving robot apparatus, a control method thereof, and a computer-readable recording medium having recorded thereon a computer program.

### BACKGROUND ART

The Internet of things (IoT) is a foundation technology and service of hyper-connected society and the next-generation Internet. The loT may also be defined as the Internet of things or the Internet of objects and refers to an environment in which information generated by uniquely identifiable objects is shared via the Internet.

Internet-connected devices (IoT devices) use built-in sensors to collect data and to respond thereto according to circumstances. IoT devices are useful for improving how people work and live. IoT devices are applied in various fields, from smart home devices that automatically adjust heating and lighting to smart factories that monitor industrial equipment to find problems and automatically solve the found problems.

On the other hand, loT devices may also be used in a driving robot apparatus for cleaning. A driving robot apparatus for cleaning is a home appliance that performs vacuum cleaning or wet mop cleaning in a home. For example, in a case where a cleaning driving robot apparatus connects to the Internet, even when a user does not live indoors, the user may remotely control the cleaning driving robot apparatus from the outside by using a mobile terminal, and may reserve a cleaning time by using the mobile terminal. A cleaning driving robot apparatus performs cleaning in a home by recognizing main home appliances and furniture through object recognition.

WO 2022/005067 A1 discloses a robot cleaner capable of controlling a water pump of a robot cleaner by a user input through an external control device.

US 2021/177226 A1 discloses systems, devices and methods for predictive maintenance of a mobile cleaning robot.

WO 2021/040161 A1 discloses a robot cleaner.

### DESCRIPTION OF EMBODIMENTS

### TECHNICAL SOLUTION TO PROBLEM

According to an aspect of the invention, there is provided a method of controlling a driving robot apparatus as set out in claim 1, and a driving robot apparatus as set out in claim 10. According to an embodiment of the disclosure, a method of controlling a driving robot apparatus includes obtaining, via a sensor, a load value of a rotary motor of driving robot apparatus as the rotary motor rotates a holder; identifying water content of a cleaning pad fixed to the holder, based on the load value of the rotary motor; and controlling a cleaning assembly to supply water to the cleaning pad fixed to the holder, based on the load value of the rotary motor.

Also, the obtaining of the load value of the rotary motor includes controlling the sensor to obtain an instantaneous load value of the rotary motor while the driving robot apparatus is traveling; and obtaining an average load value of the rotary motor via the sensor while the driving robot apparatus is traveling, and the controlling of the cleaning assembly may include controlling the cleaning assembly to supply the water to the cleaning pad fixed to the holder, based on comparing the instantaneous load value with the average load value.

Also, the controlling of the cleaning assembly may include obtaining a standard deviation of the instantaneous load value; and controlling the cleaning assembly to supply the water to the cleaning pad fixed to the holder, based on comparing the standard deviation with a threshold value.

Also, the method may further include identifying an area where the driving robot apparatus travels while supplying the water to the cleaning pad fixed to the holder; and adjusting a traveling path of the driving robot apparatus based on the identified area.

Also, the obtaining of the load value of the rotary motor may include controlling the sensor to obtain a first load value of the rotary motor while the driving robot apparatus is in a docking station, wherein a protrusion may be included in an area of the docking station where the cleaning pad fixed to the holder is located, and the controlling of the cleaning assembly may include controlling the cleaning assembly to supply the water to the cleaning pad fixed to the holder, based on comparing the first load value with a reference load value.

Also, the method may further include controlling a moving assembly so that the driving robot apparatus departs from the docking station, based on comparing the first load value with the reference load value.

Also, the method may further include controlling the sensor to obtain a second load value of the rotary motor immediately after the driving robot apparatus departs from the docking station; controlling the sensor to obtain a third load value of the rotary motor while the driving robot apparatus is traveling; and controlling the cleaning assembly to supply the water to the cleaning pad fixed to the holder, based on comparing the second load value with the third load value.

Also, the protrusion may have different slopes on both respective sides of the protrusion, and the obtaining of the first load value of the rotary motor may include controlling the rotary motor so that the cleaning pad fixed to the holder rotates in a direction in which the cleaning pad fixed to the holder travels along a high slope of the different slopes of the protrusion.

Also, the protrusion may include a central protrusion, and one or more wing protrusions located at both ends of the central protrusion, and the high slope of the different slopes of the protrusion may be located on one side of the central protrusion.

According to an embodiment of the disclosure, provided is a computer-readable recording medium having recorded thereon a computer program for causing a computer to perform at least one of the embodiments of the disclosed methods.

According to an embodiment of the disclosure, an application stored in a recording medium may execute a function of at least one of the embodiments of the disclosed methods.

According to an embodiment of the disclosure, a driving robot apparatus includes a moving assembly; a cleaning assembly including a holder to which a cleaning pad is fixable, and a rotary motor configured to rotate the holder; a sensor configured to detect a load of the rotary motor while the rotary motor is rotating the holder; and a processor configured to obtain a load value of the rotary motor by using the sensor, and control the cleaning assembly to supply water to a cleaning pad fixed to the holder, based on the load value of the rotary motor.

Also, the processor is further configured to control the sensor to obtain an instantaneous load value of the rotary motor while the driving robot apparatus is traveling, obtain an average load value of the rotary motor via the sensor while the driving robot apparatus is traveling, and control the cleaning assembly to supply the water to the cleaning pad fixed to the holder, based on comparing the instantaneous load value with the average load value.

Also, the processor may be further configured to obtain a standard deviation of the instantaneous load value, and control the cleaning assembly to supply the water to the cleaning pad fixed to the holder, based on comparing the standard deviation with a threshold value.

Also, the processor may be further configured to identify an area where the driving robot apparatus travels while supplying the water to the cleaning pad fixed to the holder, and adjust a traveling path of the driving robot apparatus, based on the identified area.

Also, the processor may be further configured to control the sensor to obtain a first load value of the rotary motor while the driving robot apparatus is in a docking station, wherein a protrusion may be included in an area of the docking station where the cleaning pad fixed to the holder is located, and control the cleaning assembly to supply the water to the cleaning pad fixed to the holder, based on a result of comparing the first load value with a reference load value.

Also, the processor may be further configured to control the moving assembly so that the driving robot apparatus departs from the docking station, based on comparing the first load value with the reference load value.

Also, the processor may be further configured to control the sensor to obtain a second load value of the rotary motor immediately after the driving robot apparatus departs from the docking station, control the sensor to obtain a third load value of the rotary motor while the driving robot apparatus is traveling, and control the cleaning assembly to supply the water to the cleaning pad fixed to the holder, based on comparing the second load value with the third load value.

Also, the protrusion may have different slopes on both respective sides of the protrusion, and the processor may be further configured to obtain the first load value by controlling the rotary motor so that the cleaning pad fixed to the holder rotates in a direction in which the cleaning pad fixed to the holder travels along a high slope of the different slopes of the protrusion.

Also, the protrusion may include a central protrusion, and one or more wing protrusions located at both ends of the central protrusion, and the high slope of the different slopes of the protrusion may be located on one side of the central protrusion.

### BRIEF DESCRIPTION OF DRAWINGS

FIG. 1 is a diagram for describing operations of a driving robot apparatus, according to an embodiment of the disclosure.
FIG. 2 is a block diagram illustrating a structure of a driving robot apparatus, according to an embodiment of the disclosure.
FIG. 3 is a block diagram illustrating a structure of a driving robot apparatus, according to an embodiment of the disclosure.
FIG. 4 is a diagram illustrating a structure of a rotary pad assembly of a driving robot apparatus, according to an embodiment of the disclosure.
FIG. 5 is a graph showing a load value of a rotary pad assembly of a driving robot apparatus, according to an embodiment of the disclosure.
FIG. 6 is a graph showing a load value of a rotary pad assembly according to water content of a cleaning pad of a driving robot apparatus, according to an embodiment of the disclosure.
FIGS. 7A to 7C are diagrams for describing a method of determining the number of attached cleaning pads or the water content of the cleaning pads by using a protrusion located in a docking station, according to an embodiment of the disclosure.
FIG. 8 is a diagram illustrating a protrusion located in a docking station, according to an embodiment of the disclosure.
FIG. 9 is a diagram illustrating a protrusion located in a docking station, according to an embodiment of the disclosure.
FIG. 10A is a graph showing a load value of a rotary pad assembly according to a protrusion located in a docking station, according to an embodiment of the disclosure.
FIG. 10B is a graph showing a load value of a rotary pad assembly according to a protrusion located in a docking station, according to an embodiment of the disclosure.
FIG. 10C is a graph showing a load value of a rotary pad assembly according to a protrusion located in a docking station, according to an embodiment of the disclosure.
FIG. 11 is a flowchart of a control method of a driving robot apparatus, according to an embodiment of the disclosure.
FIG. 12 is a flowchart of a control method of a driving robot apparatus, according to an embodiment of the disclosure.
FIG. 13 is a diagram illustrating an operation by which a driving robot apparatus adjusts a traveling path, according to an embodiment of the disclosure.
FIG. 14 is a diagram illustrating an operation by which a driving robot apparatus adjusts a traveling path, according to an embodiment of the disclosure.

### MODE OF DISCLOSURE

In the disclosure, the expression "at least one of a, b or c" indicates "a," "b," "c," "a and b," "a and c," "b and c," "all of a, b, and c," or variations thereof.

The disclosure clarifies the scope of the claims and explains the principles of embodiments of the disclosure so that those of ordinary skill in the art may carry out the embodiments of the disclosure set forth in the claims. Embodiments of the disclosure may be implemented in various forms. The embodiments of the disclosure described herein may be implemented alone, or may be implemented in combination of at least two or more embodiments of the disclosure.

Throughout the disclosure, the same reference numerals refer to the same elements. The disclosure does not explain all elements of the embodiments of the disclosure, and general descriptions in the technical field to which the embodiments of the disclosure belong or redundant descriptions between the embodiments of the disclosure will be omitted. The terms such as "module" or "unit" as used herein may be implemented as software, hardware, or firmware alone or in combination of two or more thereof. According to embodiments of the disclosure, a plurality of "modules" or "units" may be implemented as one element, or one "module" or "unit" may include a plurality of elements.

Some embodiments of the disclosure may be represented by functional block configurations and various processes. All or part of these functional blocks may be implemented in various numbers of hardware and/or software configurations that perform specific functions. For example, the functional blocks of the disclosure may be implemented by one or more microprocessors, or may be implemented by circuit configurations for certain functions. In addition, for example, the functional blocks of the disclosure may be implemented in various programming or scripting languages. The functional blocks may be implemented by algorithms that are executed on one or more processors. In addition, the disclosure may employ a related art for electronic environment setting, signal processing, and/or data processing. The terms such as "mechanism," "element," "means," and "configuration" may be used in a broad sense and are not limited to mechanical and physical configurations.

In describing the embodiment of the disclosure, when the detailed description of the relevant known technology is determined to unnecessarily obscure the gist of the disclosure, the detailed description thereof may be omitted herein. Also, numbers (e.g., first, second, etc.) used in the description of the specification are merely identification symbols for distinguishing one element from another.

Also, when one element is referred to as "connected" or "coupled" to another element, the one element may be directly connected or coupled to the other element, but it will be understood that the elements may be connected or coupled to each other via another element therebetween unless the context clearly indicates otherwise.

Embodiments of the disclosure relate to a driving robot apparatus, a control method of the driving robot apparatus, and a computer-readable recording medium having recorded thereon a computer program.

On the other hand, the technical objectives to be achieved by the embodiments of the disclosure are not limited to the technical objectives described above.

Hereinafter, the operating principle of embodiments of the disclosure and various embodiments of the disclosure will be described with reference to the accompanying drawings.

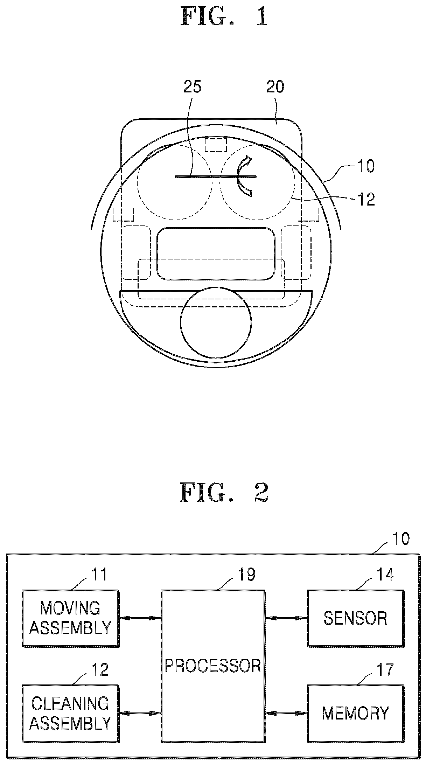

FIG. 1 is a diagram for describing operations of a driving robot apparatus, according to an embodiment of the disclosure.

Embodiments of the disclosure relate to a driving robot apparatus 10 that travels in a certain area. The driving robot apparatus 10 is a robot apparatus that is movable by itself by using wheels and the like, and is capable of performing cleaning while moving in a certain area. The certain area may be a space to be cleaned, such as a house or an office.

Referring to FIG. 1, the driving robot apparatus 10 may perform vacuum cleaning or wet mop cleaning while traveling within a traveling area. The traveling area may be defined according to a certain criterion while the driving robot apparatus 10 starts operating, or may be set in advance by a designer or a user. The traveling area of the driving robot apparatus 10 may be variously defined as a house, a store, an office, or a specific outdoor space. The traveling area of the driving robot apparatus 10 may be defined in advance by a wall, a ceiling, a sign, and the like.

The driving robot apparatus 10 travels along a traveling path within a traveling area by using a moving assembly 11 (shown in FIG. 2). For example, the driving robot apparatus 10 may move in a certain direction by using one or more wheels included in the moving assembly 11. The driving robot apparatus 10 may travel in zigzag within a traveling area.

The driving robot apparatus 10 may clean a traveling area by using a cleaning assembly 12 while traveling. The driving robot apparatus 10 may include two or more cleaning assemblies 12. For example, the driving robot apparatus 10 may include a cleaning assembly 12 that performs water cleaning on a traveling area. The driving robot apparatus 10 may perform cleaning by swiping a traveling area with a cleaning pad to which water is supplied from a water tank. The driving robot apparatus 10 may perform cleaning by using a rotary motor to rotate a holder that fixes the cleaning pad. As another example, the driving robot apparatus 10 may include a cleaning assembly 12 that sucks foreign material by vacuum in a certain area. As another example, the driving robot apparatus 10 may include a cleaning assembly 12 that applies vertical and/or horizontal vibration to shake off dust from an object (e.g., a carpet, etc.) located under the driving robot apparatus 10. The cleaning assemblies may be located in other portions of the driving robot apparatus 10. For example, the cleaning assembly 12 that performs water cleaning may be located at the front end of the driving robot apparatus 10, and the cleaning assembly 12 that applies vibration may be located at the rear end of the driving robot apparatus 10.

The driving robot apparatus 10 may travel while identifying an obstacle. The driving robot apparatus 10 may identify the obstacle by using a camera, a sensor, or the like. For example, the driving robot apparatus 10 may detect the obstacle by using an input image captured by a camera. The driving robot apparatus 10 may detect the obstacle by analyzing an input image by using an artificial intelligence model that is built in the driving robot apparatus 10 or is built in a cloud server. As another example, the driving robot apparatus 10 may detect the obstacle by using a distance measuring sensor, such as a lidar.

The driving robot apparatus 10 may follow the identified obstacle. For example, the driving robot apparatus 10 can move along a wall. As another example, the driving robot apparatus 10 may move along legs of furniture. The driving robot apparatus 10 may adjust the moving direction of the driving robot apparatus 10, so that the driving robot apparatus 10 is aligned with the obstacle in order to follow the obstacle. Also, the driving robot apparatus 10 may adjust a traveling path so as to avoid the identified obstacle.

When the driving robot apparatus 10 follows the obstacle, one or more cleaning pads may be popped out. For example, the driving robot apparatus 10 may pop out the cleaning pad located toward the obstacle so that the cleaning pad protrudes outward from the driving robot apparatus 10. The driving robot apparatus 10 may pop out the cleaning pad by using a slider that moves the holder to which the cleaning pad is fixed. The driving robot apparatus 10 may pop out the cleaning pad by using an arm having one side connected to the driving robot apparatus 10 and the other side connected to the holder that fixes the cleaning pad. The driving robot apparatus 10 travels so that the popped-out cleaning pad moves along the outer edge of the obstacle, so as to clean an area between the obstacle and the bottom of the driving robot apparatus 10.

The driving robot apparatus 10 may pop in the popped-out cleaning pad. For example, the driving robot apparatus 10 may stop following the obstacle and pop in the cleaning pad.

The driving robot apparatus 10 may identify the water content of the cleaning pad attached to the driving robot apparatus 10. For example, the driving robot apparatus 10 may identify the water content of the cleaning pad, based on the load value of the rotary motor that rotates the holder to which the cleaning pad is fixed. The driving robot apparatus 10 may identify the water content of the cleaning pad from the load value of the rotary motor by using data in which the load value of the rotary motor is matched with the water content of the cleaning pad, based on the increase in the load value of the rotary motor according to the increase in the water content of the cleaning pad. The driving robot apparatus 10 may obtain an instantaneous load value of the rotary motor, while the driving robot apparatus 10 is traveling. The instantaneous load value is the load value of the rotary motor required to rotate the cleaning pad when the driving robot apparatus 10 identifies the load value of the rotary motor. The driving robot apparatus 10 may obtain an average load value from instantaneous load values obtained for a certain time. The average load value is an average value of load values of the rotary motor required to rotate the cleaning pad for a certain time.

The driving robot apparatus 10 may identify the water content of the cleaning pad attached to the driving robot apparatus 10 in a docking station 20. The docking station 20 is a device on which the driving robot apparatus 10 is mounted for charging. The docking station 20 may include a protrusion 25 in an area where the cleaning pad of the driving robot apparatus 10 is located.

The driving robot apparatus 10 may obtain the load value of the rotary motor by using the protrusion 25 in the docking station 20. The driving robot apparatus 10 may apply pressure to the cleaning pad by using the protrusion 25, so as to emphasize the difference in the load current value of the rotary motor due to the difference in the water content of the cleaning pad.

Both sides of the protrusion 25 may have different slopes from each other. The driving robot apparatus 10 may obtain the load current value of the rotary motor by controlling the rotary motor so that the cleaning pad rotates in a direction in which the cleaning pad travels along a high slope of the protrusion 25. The protrusion 25 may include a central protrusion and/or one or more wing protrusions. The one or more wing protrusions are located at both ends of the central protrusion.

The driving robot apparatus 10 may control a water supply motor of the cleaning assembly to supply water to the cleaning pad, based on a result of identifying the water content of the cleaning pad attached to the driving robot apparatus 10. The driving robot apparatus 10 may supply water to the cleaning pad, based on a result of comparing the load value of the rotary motor according to the water content of the cleaning pad with a reference load value of the cleaning pad. The driving robot apparatus 10 may supply water to the cleaning pad, based on a result of comparing an instantaneous load value and an average load value. The driving robot apparatus 10 may supply water to the cleaning pad, based on a result of comparing a standard deviation of the instantaneous load value with a threshold value.

The driving robot apparatus 10 may depart from the docking station 20 based on the water content of the cleaning pad. The driving robot apparatus 10 may depart from the docking station 20 when it is identified that the driving robot apparatus 10 is able to perform wet cleaning on the floor. For example, the driving robot apparatus 10 may depart from the docking station 20 when the water content of the cleaning pad identified from the instantaneous load value of the rotary motor is greater than or equal to a reference water content. The reference water content is water content at which the cleaning performance of the driving robot apparatus 10 is exhibited. As another example, the driving robot apparatus 10 may depart from the docking station 20 when the instantaneous load value of the rotary motor is greater than or equal to the reference load value. The reference load value is the load value of the rotary motor corresponding to the reference water content.

The driving robot apparatus 10 may supply water to the cleaning pad while traveling, based on the water content immediately after departing from the docking station 20. For example, the driving robot apparatus 10 may supply water to the cleaning pad while traveling, based on a result of comparing the load value of the rotary motor for the floor immediately after departure from the docking station 20 with the load value of the rotary motor obtained while traveling.

The driving robot apparatus 10 may adjust the traveling path of the driving robot apparatus 10 based on the supply of water to the cleaning pad while traveling. For example, while supplying water to the cleaning pad, the driving robot apparatus 10 may adjust the traveling path so as to re-clean the area where the driving robot apparatus 10 has traveled. When water is supplied to the cleaning pad, the driving robot apparatus 10 may identify the area where the driving robot apparatus 10 has traveled, and may adjust the traveling path so as to re-clean the identified area when traveling near the identified area. When the driving robot apparatus 10 finishes cleaning the traveling area, the driving robot apparatus 10 may adjust the traveling path so as to re-clean the identified area.

According to embodiments of the disclosure, the driving robot apparatus 10 may easily identify the water content of the cleaning pad, may adjust the traveling path according to the water content of the cleaning pad, and may control the water supply.

FIG. 2 is a block diagram illustrating a structure of a driving robot apparatus, according to an embodiment of the disclosure.

Referring to FIG. 2, a driving robot apparatus 10 according to an embodiment of the disclosure may include a moving assembly 11, a cleaning assembly 12, a sensor 14, a memory 17, and a processor 19. However, not all elements illustrated in FIG. 2 are essential elements of the driving robot apparatus 10. It will be understood by those of ordinary skill in the art related to the present embodiment of the disclosure that the driving robot apparatus 10 may be implemented with more elements than the elements illustrated in FIG. 2, or may be implemented with fewer elements than the elements illustrated in FIG. 2.

The moving assembly 11 may be located under the driving robot apparatus 10 and may move the driving robot apparatus 10 forward and backward and rotate the driving robot apparatus 10.

The cleaning assembly 12 performs cleaning while the driving robot apparatus 10 is traveling. The cleaning assembly 12 may be located under the driving robot apparatus 10.

According to an embodiment of the disclosure, the cleaning assembly 12 may be classified according to the purpose and structure. For example, the cleaning assembly 12 may include a cleaning assembly that performs wet mop cleaning, a cleaning assembly that sucks foreign material by vacuum, and a cleaning assembly that applies vertical and/or horizontal vibration to shake off dust from an object. The driving robot apparatus 10 may include one or more cleaning assemblies 12 according to the purpose.

The sensor 14 obtains data to be used when the driving robot apparatus 10 travels and/or performs cleaning. For example, the sensor 14 may obtain an image to be used to detect an obstacle located near the driving robot apparatus 10. As another example, the sensor 14 may detect a distance to the obstacle located near the driving robot apparatus 10. As another example, the sensor 14 may obtain information about the position of the driving robot apparatus 10 within a certain area. As another example, the sensor 14 may obtain information about approach of a holder fixing a cleaning pad to a certain position. As another example, the sensor 14 may identify the water content of the cleaning pad attached to the driving robot apparatus 10.

The memory 17 may store programs and instructions for data processing by the processor 19 and control by the driving robot apparatus 10.

According to an embodiment of the disclosure, the memory 17 may include at least one type of storage medium selected from a memory that temporarily stores data, such as random access memory (RAM) or static random access memory (SRAM), and a data storage that non-temporarily stores data, such as flash memory type or read-only memory (ROM).

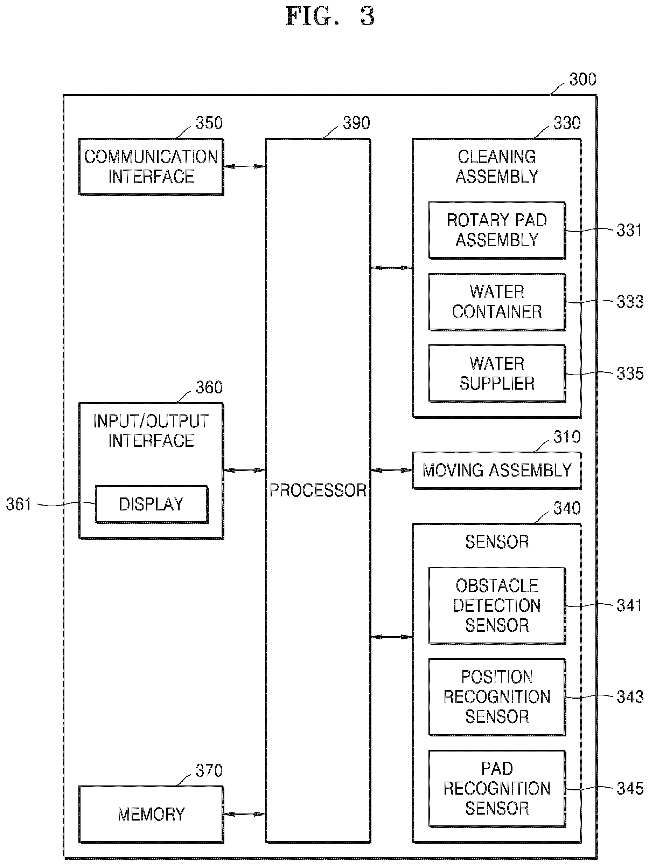

The processor 19 controls overall operations of the driving robot apparatus 10. The processor 19 may be implemented as one or more processors. The processor 19 may execute instructions stored in the memory 17 to control overall operations of the moving assembly 11, the cleaning assembly 12, the sensor 14, the memory 17, and the like. The processor 19 may execute programs and/or instructions to control the driving robot apparatus 10 to perform embodiments of the disclosure to be described with reference to FIGS. 3 to 14. For example, the processor 19 controls the moving assembly 11 to control the traveling of the driving robot apparatus 10. As another example, the processor 19 controls the cleaning assembly 12 to perform cleaning while the driving robot apparatus 10 is traveling. As another example, the processor 19 may process data obtained by the sensor 14.

FIG. 3 is a block diagram illustrating a structure of a driving robot apparatus, according to an embodiment of the disclosure.

Referring to FIG. 3, a driving robot apparatus 300 may include a moving assembly 310, a cleaning assembly 330, a sensor 340, a communication interface 350, an input/output interface 360, a memory 370, and a processor 390. However, not all elements illustrated in FIG. 3 are essential elements of the driving robot apparatus 300. It will be understood by those of ordinary skill in the art related to the present embodiment of the disclosure that the driving robot apparatus 300 may be implemented with more elements than the elements illustrated in FIG. 3, or may be implemented with fewer elements than the elements illustrated in FIG. 3.

The moving assembly 310 moves the driving robot apparatus 300.

According to an embodiment of the disclosure, the moving assembly 310 may include a pair of wheels respectively disposed on left and right edges of the center area of the main body of the driving robot apparatus 300. Also, the moving assembly 310 may include a wheel motor that applies a moving force to each wheel, and a caster wheel that is installed in front of the main body and rotates according to the state of the floor on which the driving robot apparatus 10 moves, so that an angle thereof is changed. The pair of wheels may be symmetrically disposed on the main body of the driving robot apparatus 10. The moving assembly 310 may use the wheels to move the driving robot apparatus 300 forward and backward and rotate the driving robot apparatus 300.

The cleaning assembly 330 may perform a cleaning operation while the driving robot apparatus 300 is traveling. For example, the cleaning assembly 330 may perform vibration cleaning, vacuum cleaning, and/or water cleaning.

According to an embodiment of the disclosure, the cleaning assembly 330 may include a rotary pad assembly 331 that cleans a certain area with a wet mop, a water container 333 that contains water to be supplied to the rotary pad assembly 331, and a water supplier 335 that supplies water to the rotary pad assembly 331. The rotary pad assembly 331 may include a cleaning pad, a holder that fixes the cleaning pad, and a rotary motor that rotates the holder.

According to an embodiment of the disclosure, the cleaning assembly 330 may include a mechanism that moves the cleaning pad so that the cleaning pad protrudes outward from the driving robot apparatus 300 and the cleaning pad protruding outside is inserted into the driving robot apparatus 300. For example, the cleaning assembly 330 may include a slider that moves the holder to which the cleaning pad is fixed. As another example, the cleaning assembly 330 may include an arm having one side connected to the driving robot apparatus 300 and the other side connected to the holder that fixes the cleaning pad. The cleaning assembly 330 may include a sensor and a guide that help the cleaning pad protruding outward from the driving robot apparatus 300 to be inserted into a proper position.

The sensor 340 obtains sensing data to be used when the driving robot apparatus 300 travels and/or performs cleaning. The sensing data refers to data obtained through various sensors disposed in the driving robot apparatus 300. For example, the sensor 340 may obtain data to be used to detect an obstacle while the driving robot apparatus 300 is traveling. As another example, the sensor 340 may detect a collision avoidance signal (e.g., HALO signal) generated from a charger of the driving robot apparatus 300. As another example, the sensor 340 may detect a remaining battery level of the driving robot apparatus 300. As another example, the sensor 340 may obtain data to be used when the driving robot apparatus 300 searches an indoor space and generates an indoor space map. The indoor space refers to an area in which the driving robot apparatus 300 may move substantially freely.

According to an embodiment of the disclosure, the sensor 340 may include an obstacle detection sensor 341, a position recognition sensor 343, and a pad recognition sensor 345.

The obstacle detection sensor 341 may obtain data to be used to detect an obstacle located on a traveling path of the driving robot apparatus 300. The obstacle detection sensor 341 may include at least one of an image sensor that obtains an image, a three-dimensional (3D) sensor, a lidar sensor, or an ultrasonic sensor. For example, the image sensor may obtain surrounding and/or ceiling images to be used to detect an obstacle located near the driving robot apparatus 300. The lidar sensor and/or the ultrasonic sensor may obtain data regarding a distance to the obstacle located near the driving robot apparatus 300. The 3D sensor may obtain 3D data regarding an area within a certain distance from the driving robot apparatus 300.

The position recognition sensor 343 may obtain data for recognizing the position of the driving robot apparatus 300 in the indoor space. The position recognition sensor 343 may recognize the position of the driving robot apparatus based on at least one of image data, 3D data obtained by the 3D sensor, information about the distance to the obstacle, which is obtained by the lidar sensor, or strength of a communication signal received from an access point (AP) and/or a home appliance. The position recognition sensor 343 may recognize the position of the driving robot apparatus 300 in the indoor space map. The indoor space map may include data regarding at least one of a navigation map, a simultaneous localization and mapping (SLAM) map, or an obstacle recognition map.

The pad recognition sensor 345 may obtain data to be used to identify whether the cleaning pad is attached to the driving robot apparatus 300 and/or to identify the type of the cleaning pad attached to the driving robot apparatus 300. The pad recognition sensor 345 may identify the water content of the cleaning pad. The pad recognition sensor 345 may identify the water content of the cleaning pad to which rotational force is applied by the rotary motor, based on a result of identifying the load value of the rotary motor.

The communication interface 350 may communicate with an external device. For example, the communication interface 350 may transmit and receive data to and from a mobile terminal (e.g., a smartphone, a laptop computer, a tablet personal computer (PC), a digital camera, an e-book terminal, or a digital broadcasting terminal), a server device, or a home appliance (e.g., a refrigerator or a washing machine). The communication interface 350 may include a Bluetooth communication interface, a Bluetooth Low Energy (BLE) communication interface, a Near Field Communication interface, a wireless local area network (WLAN) (Wi-Fi) communication interface, a ZigBee communication interface, an Infrared Data Association (IrDA) communication interface, a Wi-Fi Direct (WFD) communication interface, an ultra-wideband (UWB) communication interface, an Ant+ communication interface, a mobile communication interface, etc., but the disclosure is not limited thereto.

The input/output interface 360 is a hardware module and/or device that receives a user input and outputs information. For example, the input/output interface 360 may include an output device, such as a display 361 or a speaker, an input device, such as a microphone, a keyboard, a touch pad, or a mouse, and a combination (e.g., a touchscreen) of the output device and the input device. Also, the input/output interface 360 may receive a user input of controlling the driving robot apparatus 300. The input/output interface 360 may output information about the state of the driving robot apparatus 300 and information about the operation mode of the driving robot apparatus 300.

The memory 370 may store various types of data, for example, an operating system (OS) for data processing by the processor 390 and control by the driving robot apparatus 300, programs such as applications, and files. The memory 370 may store at least one instruction and at least one program for processing and control by the processor 390.

The memory 370 may include at least one type of storage medium selected from flash memory-type memory, hard disk-type memory, multimedia card micro-type memory, card-type memory (e.g., secure digital (SD) or extreme digital (XD) memory), random access memory (RAM), static random access memory (SRAM), read-only memory (ROM), electrically erasable programmable read-only memory (EEPROM), programmable read-only memory (PROM), magnetic memory, magnetic disc, and optical disc, but the disclosure is not limited thereto.

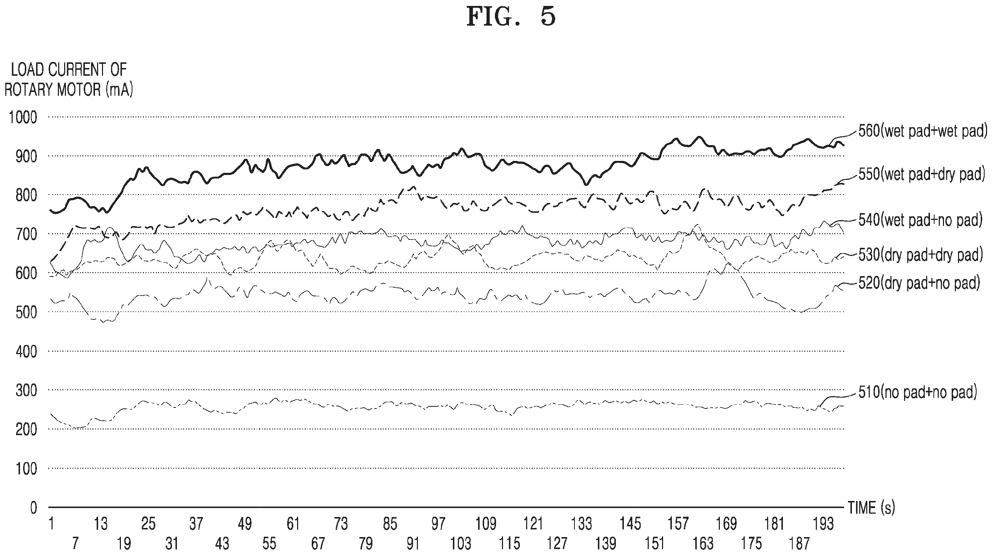

The processor 390 controls overall operations of the driving robot apparatus 300. The processor 390 may be implemented as one or more processors. The processor 390 may execute instructions stored in the memory 370 to control overall operations of the moving assembly 310, the cleaning assembly 330, the sensor 340, the communication interface 350, the input/output interface 360, the memory 370, and the like. The processor 390 may execute programs and/or instructions to control operations of the driving robot apparatus 300 to be described with reference to FIGS. 5 to 14.

For example, the processor 390 may control the moving assembly 310 to control the traveling of the driving robot apparatus 300. The processor 390 may generate a driving signal for controlling the moving assembly 310, and may output the driving signal to the moving assembly 310. The moving assembly 310 may drive each component of the moving assembly 310 based on the driving signal output from the processor 390. The processor 390 may set the traveling path of the driving robot apparatus 300 and drive the moving assembly 310 to move the driving robot apparatus 300 along the traveling path.

As another example, the processor 390 may control the cleaning assembly 330 so that the driving robot apparatus 300 performs cleaning while traveling. The processor 390 may generate a driving signal for controlling the cleaning assembly 330, and may output the driving signal to the cleaning assembly 330. The cleaning assembly 330 may drive each component of the cleaning assembly 330 based on the driving signal output from the processor 390. The cleaning assembly 330 may control the rotation and movement of the holder that fixes the cleaning pad and the supply of water to the cleaning pad according to the drive signal output from the processor 390. The processor 390 may generate a driving signal for moving the holder that fixes the cleaning pad, so that the cleaning pad is popped out to the outside of the driving robot apparatus 300. The processor 390 may generate a driving signal for moving the holder so that the popped-out cleaning pad is popped in.

As another example, the processor 390 may process data obtained by the sensor 340. The processor 390 may process an image obtained by the sensor 340 so as to identify an obstacle from the image. The processor 390 may identify an obstacle from distance data obtained by the sensor 340. The processor 390 may generate and adjust a traveling path by using data regarding the position of the driving robot apparatus 300, which is obtained by the sensor 340.

As another example, the processor 390 may control the moving assembly 310 and the cleaning assembly 330 based on a control signal received through the communication interface 350. The processor 390 may control the moving assembly 310 so that the driving robot apparatus 300 moves to a certain area, based on a user input related to the certain area, which is received through the communication interface 350, and may control the cleaning assembly 330 so that the driving robot apparatus 300 cleans the certain area.

As another example, the processor 390 may control the moving assembly 310 and the cleaning assembly 330 based on a control signal received through the input/output interface 360. The processor 390 may control the moving assembly 310 so that the driving robot apparatus 300 moves to a certain area, based on a user input related to the certain area, which is input through the input/output interface 360, and may control the cleaning assembly 330 so that the driving robot apparatus 300 cleans the certain area.

As another example, the processor 390 may identify the water content of the cleaning pad from the load value of the rotary motor that applies rotational force to the cleaning pad. For example, the processor 390 may identify the water content of the cleaning pad by using data obtained by matching the load value of the rotary motor with respect to the water content of the cleaning pad.

As another example, the processor 390 may control the water supply motor of the cleaning assembly 330 to supply water to the cleaning pad, based on the water content of the cleaning pad. The driving robot apparatus 10 may supply water to the cleaning pad, based on a result of comparing the load value of the rotary motor according to the water content of the cleaning pad with the reference load value of the cleaning pad. The processor 390 may control the water supply motor to supply water to the cleaning pad, based on the water content of the cleaning pad obtained during traveling.

As another example, the processor 390 may adjust the traveling path based on the supply of water to the cleaning pad while the driving robot apparatus 10 is traveling. While the driving robot apparatus 10 supplies water to the cleaning pad, the processor 390 may adjust the traveling path so as to re-clean the area where the driving robot apparatus 10 has traveled.

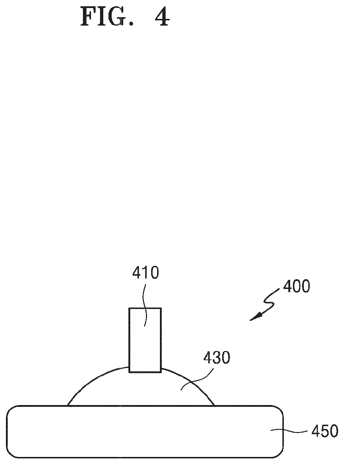

FIG. 4 is a diagram illustrating a structure of a rotary pad assembly of a driving robot apparatus, according to an embodiment of the disclosure. The driving robot apparatus may clean the floor by using a rotary pad assembly 400.

Referring to FIG. 4, the rotary pad assembly 400 may include a cleaning pad 450, a holder 430, and a rotary motor 410.

The rotary motor 410 applies rotation to the cleaning pad 450 in order to clean the traveling path of the driving robot apparatus. The rotary motor 410 may apply rotation to the cleaning pad 450 by applying rotation to the holder 430 that fixes the cleaning pad 450. The rotary motor 410 may rotate in uni-direction or bi-direction based on a drive signal generated by a processor of the driving robot apparatus. For example, the rotary motor 410 may rotate according to a driving signal including a rotating direction determined based on positions of an obstacle and the rotary motor 410/the cleaning pad 450.

The holder 430 fixes the cleaning pad 450. For example, the holder 430 may have a lower portion made of Velcro, and may be coupled to the cleaning pad 450 having an upper portion made of Velcro. The holder 430 is connected to the rotary motor 410, so that rotational force applied from the rotary motor 410 may be transmitted to the cleaning pad 450. The holder 430 may have a disk shape.

The cleaning pad 450 is a pad that cleans the traveling path of the driving robot apparatus. The cleaning pad 450 may have a disk shape. A diameter of the cleaning pad 450 may be greater than a diameter of the holder 430. The cleaning pad 450 performs water cleaning in such a manner that the upper surface of the cleaning pad 450 absorbs supplied water and the lower surface of the cleaning pad 450 swipes the floor by using the absorbed water. The cleaning pad 450 may include the upper surface and the lower surface respectively including different materials from each other. The cleaning pad 450 may include a first member constituting an upper portion, a second member constituting a lower portion, and an outer portion that surrounds and couples the circumferences of the upper and lower portions to each other. A portion of the center of the cleaning pad 450 may be an opening.

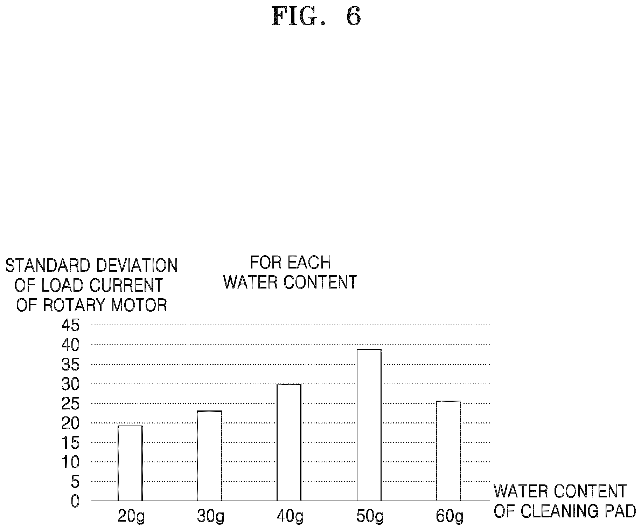

FIG. 5 is a graph showing the load value of the rotary pad assembly of the driving robot apparatus, according to an embodiment of the disclosure, and FIG. 6 is a graph showing the load value of the rotary pad assembly according to the water content of the cleaning pad of the driving robot apparatus, according to an embodiment of the disclosure.

The graphs illustrated in FIG. 5 show the load value of the rotary motor according to the state of the cleaning pad of the driving robot apparatus when the docking station is provided with the protrusion. The horizontal axis of FIG. 5 represents the time (seconds) and the vertical axis of FIG. 5 represents the load current value (mA) of the rotary motor.

A first graph 510 shows the load value of the rotary motor when the cleaning pad is not attached to the driving robot apparatus. A second graph 520 shows the load value of the rotary motor when one cleaning pad is attached to the driving robot apparatus, and is dry. A third graph 530 shows the load value of the rotary motor when both of two cleaning pads attached to the driving robot apparatus are dry. A fourth graph 540 shows the load value of the rotary motor when one cleaning pad is attached to the driving robot apparatus, and is wet. A fifth graph 550 shows the load value of the rotary motor when only one of two cleaning pads attached to the driving robot apparatus is wet. A sixth graph 560 shows the load value of the rotary motor when both of two cleaning pads attached to the driving robot apparatus are wet.

Referring to the graphs 510, 520, 530, 540, 550, and 560 of FIG. 5, the load value of the rotary motor increases more when there are two cleaning pads than when there is one cleaning pad, and the load value of the rotary motor increases more when the cleaning pad is wet than when the cleaning pad is dry. Accordingly, the driving robot apparatus may determine at least one of whether the cleaning pad(s) is attached, the number of attached cleaning pads, and whether the attached cleaning pad(s) is wet beyond a reference water content, based on the load current value of the rotary motor over time.

The method of, when two cleaning pads are rotated by one rotary motor, determining the number of attached cleaning pads and whether the cleaning pads are wet, based on the load current value of the rotary motor, has been described with reference to FIG. 5. However, when rotary motors are respectively provided to correspond to two cleaning pads, the water content and whether the cleaning pads corresponding to the rotary motors are attached may be determined based on the load current values of the rotary motors.

The graphs illustrated in FIG. 6 show the standard deviation values of the load current of the rotary motor according to the water content of the cleaning pad of the driving robot apparatus. The horizontal axis of FIG. 6 represents the water content of the cleaning pad and the vertical axis of FIG. 6 represents the standard deviation value of the load current of the rotary motor.

Referring to FIG. 6, when the cleaning pad is dry, the standard deviation of the load value of the rotary motor is 20. When the water content of the cleaning pad is 10 g, the standard deviation of the load value of the rotary motor is 23. When the water content of the cleaning pad is 20 g, the standard deviation of the load value of the rotary motor is 30. When the water content of the cleaning pad is 30 g, the standard deviation of the load value of the rotary motor is 38. When the water content of the cleaning pad is 40 g, the standard deviation of the load value of the rotary motor is 25.

That is, as the water content of the cleaning pad increases, the standard deviation value of the load current of the rotary motor generally increases up to the critical level of the water content (50 g in FIG. 6). Accordingly, the driving robot apparatus may determine the water content of the cleaning pad, based on the standard deviation value of the load current of the rotary motor. Also, the driving robot apparatus may determine the amount of water to be supplied to the cleaning pad, based on the determined water content. For example, as the appropriate level of the water content of the cleaning pad is set to 40 g and the standard deviation value of the load current of the rotary motor is calculated as 20, the water content of the cleaning pad may be determined to be 20 g, and 20 g of water may be supplied to the cleaning pad.

However, as the water content exceeds the critical level, the cleaning pad no longer absorbs water, and the friction between the cleaning pad and the floor is reduced by the water content of the cleaning pad. Thus, the standard deviation value of the load current of the rotary motor may gradually decrease. Accordingly, while supplying water to the cleaning pad, the driving robot apparatus may also determine whether the water content is less than the critical level, based on whether the standard deviation value of the load current of the rotary motor increases. The driving robot apparatus may determine the amount of water to be supplied to the cleaning pad, based on the determined water content of the cleaning pad and whether the water content is less than the critical level.

As in the graphs illustrated in FIGS. 5 and 6, the driving robot apparatus may store matching data obtained by matching the load current value of the rotary motor and the standard deviation value of the load current according to the number of attached cleaning pads and the water content of the cleaning pads. For example, the driving robot apparatus may store the matching data in a memory. As another example, the driving robot apparatus may store the matching data in a cloud server.

The driving robot apparatus may detect the state of the cleaning pad by using the matching data. For example, the driving robot apparatus may identify the number of cleaning pads attached to the driving robot apparatus and/or the water content of the cleaning pad, based on a result of comparing the load value of the rotary motor obtained by using the sensor with the load value of the rotary motor included in the matching data. The driving robot apparatus may detect the state of the cleaning pad in the docking station, or may detect the state of the cleaning pad while traveling.

The driving robot apparatus may control the water supply motor to supply water to the cleaning pad, based on a result of detecting the cleaning pad. For example, the driving robot apparatus may control the water supply motor to supply water to the cleaning pad, based on a result of comparing the standard deviation of the load value of the rotary motor with the standard deviation of the load value of the rotary motor for the appropriate water content. As another example, the driving robot apparatus may control the water supply motor to supply water to the cleaning pad at certain intervals, based on the standard deviation of the load value of the rotary motor when starting traveling.

The driving robot apparatus may adjust the traveling path based on a result of detecting the cleaning pad. For example, while supplying water to the cleaning pad, the driving robot apparatus may adjust the traveling path so as to re-clean the area where the driving robot apparatus has traveled. As another example, the driving robot apparatus may adjust the traveling path so as to return to the docking station, based on a result of identifying that the cleaning pad is removed.

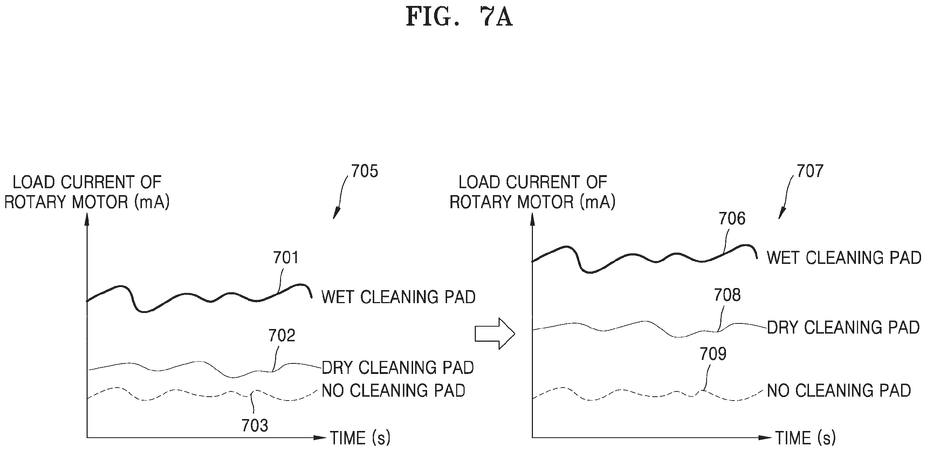

FIGS. 7A to 7C are diagrams for describing a method of determining the number of attached cleaning pads or the water content of the cleaning pads by using a protrusion located at a docking station, according to an embodiment of the disclosure.

A first graph 705 of FIG. 7A shows, in a case where the docking station has no protrusion, a load current 701 of the rotary motor when the cleaning pad is wet beyond an appropriate water content, a load current 702 of the rotary motor when the cleaning pad is dry, and a load current 703 of the rotary motor when the cleaning pad is not attached. Referring to the first graph 705, even when the docking station has no protrusion, the difference between the load current corresponding to the dry cleaning pad and the load current corresponding to the wet cleaning pad is great, and thus, the driving robot apparatus may easily identify whether the cleaning pad is dry or wet.

On the other hand, when the docking station has no protrusion, the difference between the load current when the dry cleaning pad is attached and the load current when the cleaning pad is not attached is not great, and thus, the driving robot apparatus may have difficulty identifying the dry cleaning pad and no cleaning pad. Referring to a second graph 707 of FIG. 7A which shows, in a case where the docking station has one or more protrusions, a load current 706 of the rotary motor when the cleaning pad is wet beyond an appropriate water content, a load current 708 of the rotary motor when the cleaning pad is dry, and a load current 709 of the rotary motor when the cleaning pad is not attached. Because one or more protrusions are provided on the pad holder of the docking station, the difference between the load current 708 when the dry cleaning pad is attached and the load current 709 when the cleaning pad is not attached may increase. Accordingly, the driving robot apparatus may identify whether the dry cleaning pad is attached to the holder or whether the cleaning pad is not attached.

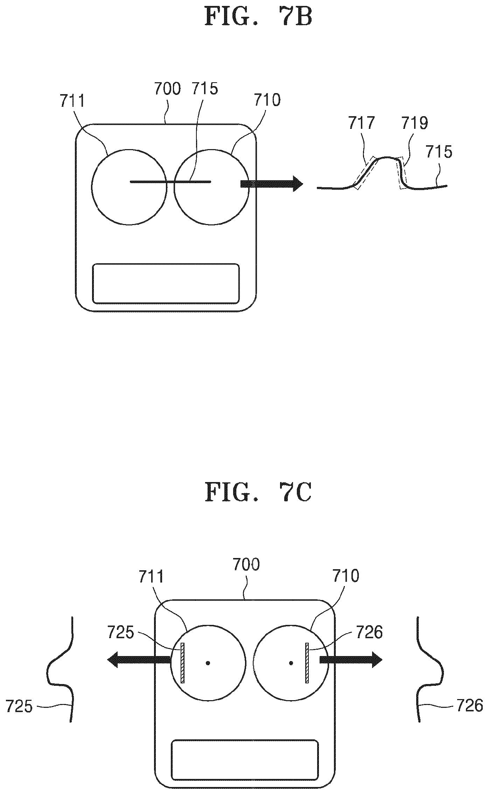

Referring to FIG. 7B, the docking station 700 may include one or more protrusions 715 on a pad holder 710 on which the cleaning pad of the driving robot apparatus is mounted. As the cleaning pad rubs against the one or more protrusions 715 when rotating, the load of the rotary motor may increase.

The protrusion 715 may include a central protrusion 715 crossing a plurality of pad holders 710 and 711 of the docking station 700 so as to simultaneously press a plurality of cleaning pads of the driving robot apparatus.

Also, portions of the central protrusion 715 corresponding to the respective pad holders 710 and 711 may have different angles from each other, so that the friction force between the left cleaning pad and the protrusion 715 is different from the friction force between the right cleaning pad and the protrusion 715. For example, as illustrated in FIG. 7B, a portion 717 of the central protrusion 715 corresponding to the left pad holder 711 may have a gentle slope, and a portion 719 of the central protrusion 715 corresponding to the right pad holder 710 may have a steep slope. Accordingly, the difference between the load current value of the rotary motor when the cleaning pad is placed only on the right pad holder 710 and the load current value of the rotary motor when the cleaning pad is placed only on the left pad holder 711 may increase. Accordingly, the driving robot apparatus may identify the holder to which the cleaning pad is attached, based on the load current value of the rotary motor.

Referring to FIG. 7C, the docking station 700 may include protrusions 726 and 725 respectively on the pad holder 710 and 711. The protrusions 725 and 726 may be provided so that a clockwise curvature angle and a counterclockwise curvature angle are different from each other, and thus, the frictional force between the cleaning pad and the protrusion 725 and the frictional force between the cleaning pad and the protrusion 726 are different from each other according to the rotating direction of the cleaning pad. Accordingly, the driving robot apparatus may more accurately determine the number of attached cleaning pads and the water content of the cleaning pads, based on the load current value of the rotary motor corresponding to the inward rotation of the cleaning pads (counterclockwise for the right pad and clockwise for the left pad) and the standard deviation value of the load current, and the load current value of the rotary motor corresponding to the outward rotation of different frictional forces (clockwise for the right pad and counterclockwise for the left pad) and the standard deviation of the load current.

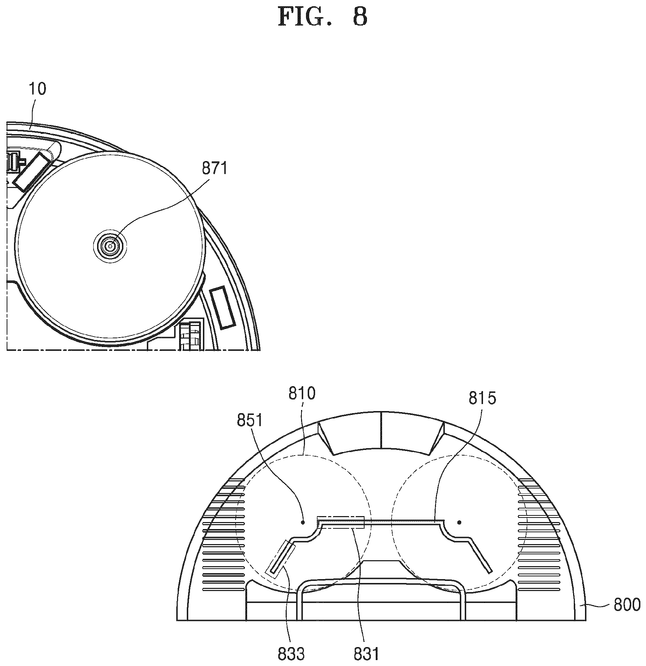

FIG. 8 is a diagram illustrating a protrusion of a docking station, according to an embodiment of the disclosure.

The protrusion 815 may include a first load 831 and a second load 833 located at different angles from each other with respect to a center point 851. The center point 851 may be a position corresponding to a central axis 871 of the rotary motor of the driving robot apparatus 10. Also, the center point 851 may be a position corresponding to a center of a cleaning pad placed on a pad holder 810. The first load 831 may be referred to as a central protrusion and the second load 833 may be referred to as a wing protrusion. The wing protrusion 833 may face a certain direction and may be configured in a symmetrical shape. As the protrusion 815 includes the two loads, that is, the first and second loads 831 and 833, the load current value of the rotary motor may increase.

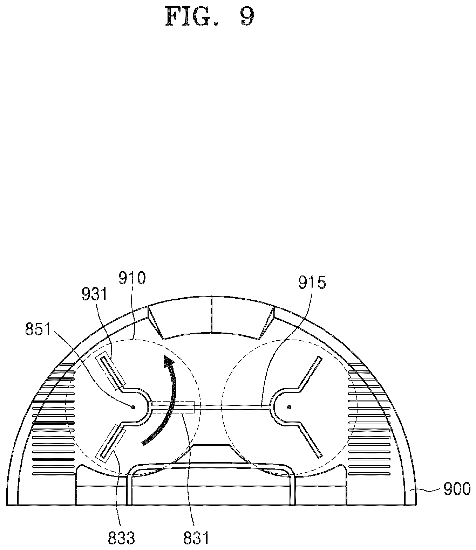

FIG. 9 is a diagram illustrating a protrusion of a docking station, according to an embodiment of the disclosure.

A protrusion 915 may include a first load 831, a second load 833, and a third load 931 located at different angles from each other with respect to a center point 851. The center point 851 may be a position corresponding to a center of a cleaning pad placed on a pad holder 910. The first load 831, the second load 833, and the third load 931 may be provided at positions separated by the same angle with respect to the center point 851. As the protrusion 915 includes the three loads, that is, the first, second, and third loads 831, 833, and 931, the load current value of the rotary motor may increase.

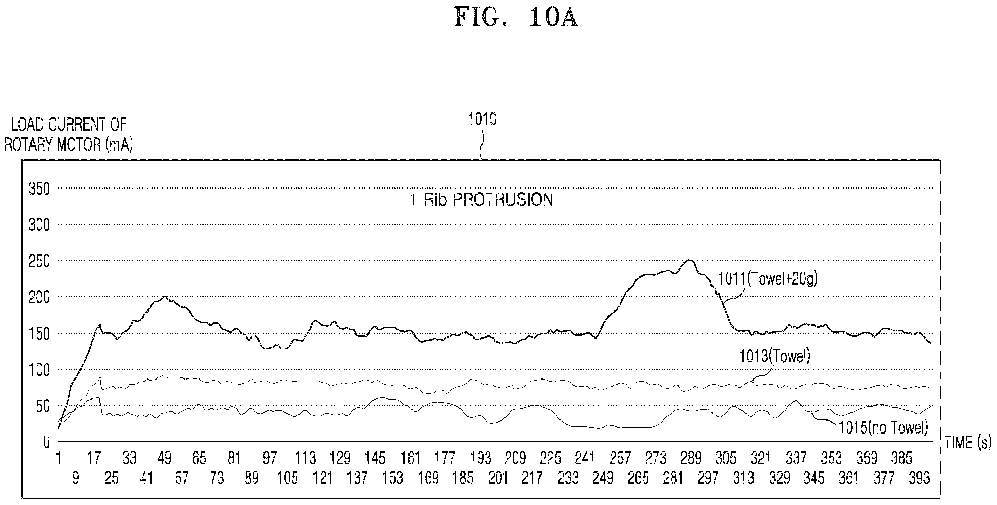

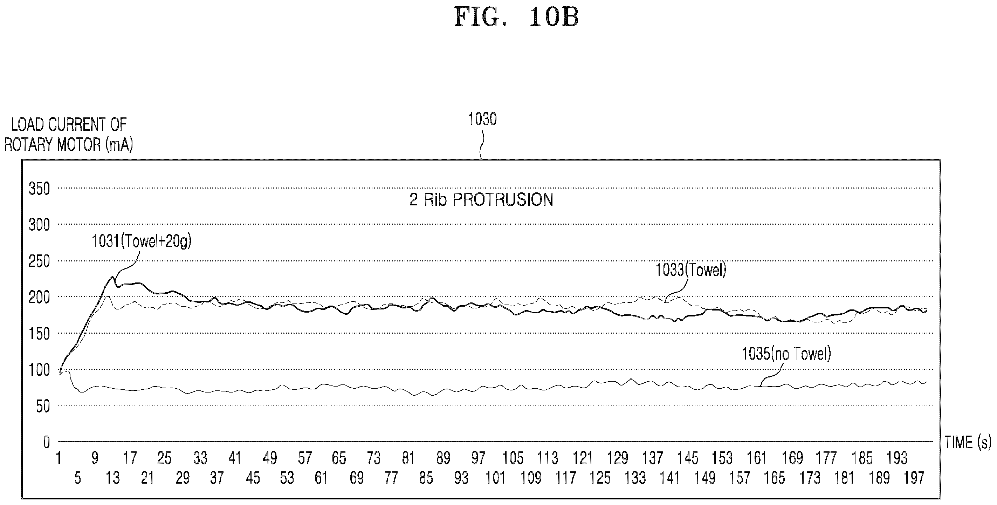

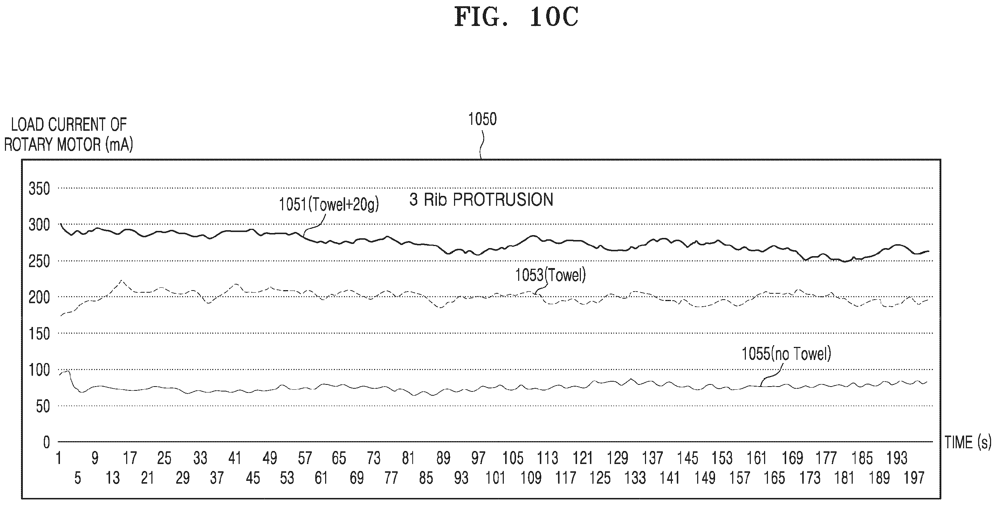

FIGS. 10A to 10C are graphs showing load values of rotary pad assemblies according to protrusions located in a docking station, according to an embodiment of the disclosure. FIG. 10A is a graph according to the embodiment of the disclosure illustrated in FIG. 7B or 7C, FIG. 10B is a graph according to the embodiment of the disclosure illustrated in FIG. 8, and FIG. 10C is a graph according to the embodiment of the disclosure illustrated in FIG. 9.

Referring to FIG. 10A, when the protrusion provided on the pad holder of the docking station includes one load, as illustrated in FIGS. 7B and 7C, a diagram 1010 of the load current of the rotary motor includes a first graph 1011 showing the load value of the rotary motor of the driving robot apparatus to which the cleaning pad made of towel material containing water is attached, a second graph 1013 showing the load value of the rotary motor of the driving robot apparatus to which the cleaning pad containing no water is attached, and a third graph 1015 showing the load value of the rotating motor of the driving robot apparatus to which the cleaning pad is not attached.

Comparing the first graph 1011, the second graph 1013, and the third graph 1015 with each other, the load value indicated by the third graph 1015, that is, the load value of the rotary motor to which the cleaning pad is not attached, is the lowest. The load value indicated by the first graph 1011, that is, the load value of the rotary motor to which the wet cleaning pad is attached, is higher than the load value indicated by the second graph 1013, that is, the load value of the rotary motor to which the dry cleaning pad is attached. That is, because the cleaning pad is pressed by the protrusion 715 included in the docking station 700, the difference in the load value of the rotary motor occurs according to whether the cleaning pad is attached and whether the cleaning pad contains water. Because the difference between the load value indicated by the first graph 1011, that is, the load value of the rotary motor to which the wet cleaning pad is attached, and the load value indicated by the second graph 1013, that is, the load value of the rotary motor to which the dry cleaning pad is attached, is greater than a reference difference, the driving robot apparatus may easily identify the water content of the cleaning pad and whether the cleaning pad is attached. However, because the difference between the load value indicated by the second graph 1013, that is, the load value of the rotary motor to which the dry cleaning pad is attached, and the load value indicated by the third graph 1015, that is, the load value of the rotary motor to which the cleaning pad is not attached, is not great, the driving robot apparatus may have difficulty identifying the dry cleaning pad and no cleaning pad.

Referring to FIG. 10B, because the protrusion of the pad holder of the docking station includes two loads, as illustrated in FIG. 8, the driving robot apparatus may easily identify the dry cleaning pad and no cleaning pad. Specifically, a diagram 1030 according to the embodiment of the disclosure illustrated in FIG. 8 includes a first graph 1031 showing the load value of the rotary motor of the driving robot apparatus to which the cleaning pad containing water is attached, by using the central protrusion included in the pad holder of the docking station and one wing protrusion located at each of both ends of the central protrusion, a second graph 1033 showing the load value of the rotary motor of the driving robot apparatus to which the cleaning pad containing no water is attached, and a third graph 1035 showing the load value of the rotary motor of the driving robot apparatus to which the cleaning pad is not attached.

Referring to the graphs of FIG. 10B, it is confirmed that there is almost no difference between the first graph 1031 corresponding to the cleaning pad containing water and the second graph 1033 corresponding to the cleaning pad containing no water. Therefore, when the protrusion of the pad holder of the docking station includes two loads, as illustrated in FIG. 8, it may be easy to identify the dry cleaning pad and no cleaning pad, but it may be difficult to identify the cleaning pad containing no water and the cleaning pad containing a small amount of water.

Referring to FIG. 10C, when the protrusion of the pad holder of the docking station includes three loads, as illustrated in FIG. 9, the driving robot apparatus may easily identify the dry cleaning pad and no cleaning pad, and may also easily identify the cleaning pad containing no water and the cleaning pad containing a small amount of water. Specifically, a diagram 1050 according to the embodiment of the disclosure illustrated in FIG. 9 includes a first graph 1051 showing the load value of the rotary motor of the driving robot apparatus to which the cleaning pad containing water is attached, a second graph 1053 showing the load value of the rotary motor of the driving robot apparatus to which the cleaning pad containing no water is attached, and a third graph 1055 showing the load value of the rotary motor of the driving robot apparatus to which the cleaning pad is not attached.

Comparing FIG. 10B with FIG. 10C, although the load value of the first graph 1031 of FIG. 10B is similar to the load value of the second graph 1033 of FIG. 10B, the load value of the first graph 1051 of FIG. 10C is greater than the load value of the second graph 1053 of FIG. 10C. In other words, it may be confirmed that as the number of loads of the protrusion (e.g., wing protrusions) increases, even a small amount of water increases the difference in the load current value of the rotary motor between the wet cleaning pad and the dry cleaning pad. The difference in load value occurs due to the difference in shape of the protrusions 815 and 915. That is, because one wing protrusion of the protrusion 815 applies non-uniform pressure to the cleaning pads, the difference in load value does not occur regardless of whether the cleaning pad attached to the driving robot apparatus contains water. Because two wing protrusions of the protrusion 915 apply uniform pressure to the cleaning pads, the difference in load value greatly occurs according to whether the cleaning pad attached to the driving robot apparatus contains water.

Comparing FIG. 10A with FIG. 10C, the first graph 1011 of FIG. 10A has a great load value deviation, but the first graph 1051 of FIG. 10C has a small load value deviation. The difference in load value occurs due to the difference in shape of the protrusions 715 and 915. That is, because the two wing protrusions of the protrusion 915 uniformly press the cleaning pads, the deviation of the load value of the rotary motor of the driving robot apparatus is small.

The driving robot apparatus may easily identify the water content of the cleaning pad and whether the cleaning pad is attached, by pressing the cleaning pads by using the protrusions 715, 815, and 915 respectively included in the docking stations 700, 800, and 900. Also, the driving robot apparatus may store the load current value of the rotary motor and the standard deviation value of the load current for each water content of the cleaning pad obtained by using the protrusions 715, 815, and 915 of the docking stations 700, 800, and 900. The driving robot apparatus may identify the water content of the cleaning pad by using prestored data in which the water content of the cleaning pad matches the load value of the rotary motor, or prestored data in which the water content of the cleaning pad matches the standard deviation value of the rotary motor.

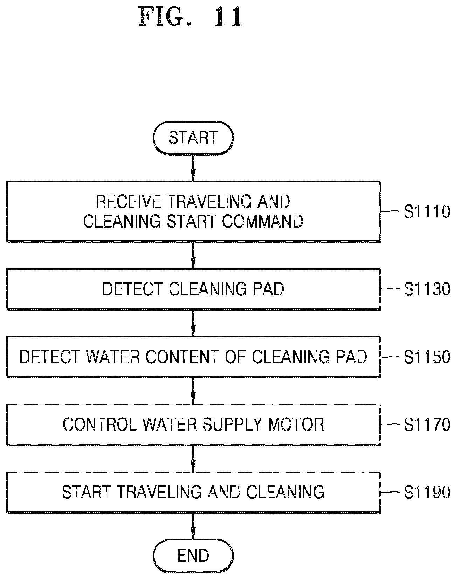

FIG. 11 is a flowchart of a control method of a driving robot apparatus, according to an embodiment of the disclosure. Each operation of the control method of FIG. 11 may be configured with one or more instructions to be executed by the driving robot apparatus, and may be stored in a recording medium.

In operation S1110, the driving robot apparatus receives a traveling and cleaning start command. For example, the driving robot apparatus may receive a user input of cleaning a certain area with a wet mop through an input/output interface, while traveling in the certain area. As another example, the driving robot apparatus may receive a control signal for traveling in and cleaning a certain area from an external device (e.g., a server, a mobile terminal, etc.) through a communication interface. For another example, the driving robot apparatus may receive a control signal for start traveling and cleaning at a preset time.

In operation S1130, the driving robot apparatus detects a cleaning pad.

The driving robot apparatus may use a sensor to detect whether the cleaning pad is attached. Also, the driving robot apparatus may identify a type of the cleaning pad. For example, the driving robot apparatus may emit an optical signal to the cleaning pad and identifying whether the cleaning pad is attached and the type of the cleaning pad by using intensity of reflected light received from the cleaning pad.

As another example, the driving robot apparatus may identify whether the cleaning pad is attached to the holder, based on the load value of the rotary motor, by rotating the holder to which the cleaning pad is attached. In this case, the pad holder of the docking station may be provided with the protrusion. As the cleaning pad rubs against the protrusion, the load current value of the rotary motor may increase.

The driving robot apparatus may obtain data regarding the load current value according to whether the cleaning pad is attached, or the standard deviation value of the load current. Whether the cleaning pad is attached may include a case where only the right cleaning pad is attached, a case where only the left cleaning pad is attached, and a case where both of the left and right cleaning pads are attached. Accordingly, the driving robot apparatus may identify the holder to which the cleaning pad is attached, based on at least one of the load current value of the rotary motor or the standard deviation value of the load current.

As another example, the driving robot apparatus may identify whether the cleaning pad is attached by receiving a result of identifying the cleaning pad from the docking station. The docking station may identify the cleaning pad by using a sensor located on the pad holder. The docking station may identify the cleaning pad by emitting an optical signal to the cleaning pad by using an optical sensor. The docking station may identify the cleaning pad in contact with the pad holder by using a physical contact sensor.

In operation S1150, the driving robot apparatus detects the water content of the cleaning pad.

The driving robot apparatus may detect the water content of the cleaning pad, based on the load value of the rotary motor that applies rotational force to the cleaning pad by rotating the cleaning pad detected in operation S1130.

According to an embodiment of the disclosure, the driving robot apparatus may identify the water content of the cleaning pad by rotating the holder that fixes the cleaning pad in the docking station. The driving robot apparatus may identify the water content of the cleaning pad, based on a result of comparing the load value of the rotary motor according to the water content by using the protrusion included in the docking station with prestored data in which the water content of the cleaning pad matches the load value of the rotary motor. The data in which the water content of the cleaning pad matches the load value of the rotary motor may be previously stored in a memory of the driving robot apparatus and/or a cloud server. The driving robot apparatus may identify the water content of the cleaning pad by using the load value of the rotary motor when the cleaning pad rotates in a direction in which the cleaning pad travels along a high slope among both sides of the protrusion having different slopes from each other. The driving robot apparatus may identify the water content of the cleaning pad by using a protrusion including a central protrusion and one or more wing protrusions located at both ends of the central protrusion.

According to an embodiment of the disclosure, the driving robot apparatus may identify the water content of the cleaning pad, based on a result of comparing the instantaneous load value of the rotary motor while traveling with the average load value obtained by accumulating the instantaneous load values over time. In this case, the driving robot apparatus may perform comparison with the average load value by using the standard deviation of the instantaneous load value. The instantaneous load value is the load value of the rotary motor required to rotate the cleaning pad when the driving robot apparatus identifies the load value of the rotary motor. The average load value is an average value of load values of the rotary motor required to rotate the cleaning pad for a certain time.

In operation S1170, the driving robot apparatus controls the water supply motor.

The driving robot apparatus may control the water supply motor to supply water to the cleaning pad, based on the water content of the cleaning pad identified in operation S1150. For example, the driving robot apparatus may control the water supply motor to supply water to the cleaning pad, based on a result of comparing the load value of the rotary motor obtained in operation S1150 with a reference load value.

The driving robot apparatus may supply water to the cleaning pad, based on the difference between the reference water content and the water content of the cleaning pad identified in operation S1150. The driving robot apparatus may control the water supply motor to supply a shortage of the reference water content to the cleaning pad.

According to an embodiment of the disclosure, the driving robot apparatus may supply water to the cleaning pad, based on the water content of the pad detected in the docking station. For example, the driving robot apparatus may supply water to the cleaning pad in the docking station, based on a result that the water content of the cleaning pad detected in the docking station is lower than the reference water content. As another example, the driving robot apparatus may match the water content, which corresponds to a first load value of the rotary motor identified on the floor immediately after the driving robot apparatus departs from the docking station, to the water content identified by using the protrusion on the docking station. The driving robot apparatus may supply water to the cleaning pad while traveling, based on a result of comparing a second load value of the rotary motor obtained while traveling with the first load value of the rotary motor.

According to an embodiment of the disclosure, the driving robot apparatus may supply water to the cleaning pad, based on the water content of the cleaning pad detected while traveling. The driving robot apparatus may supply water to the cleaning pad, based on a result of identifying that the standard deviation of the instantaneous load value of the rotary motor while traveling is lower than a threshold value. The driving robot apparatus may supply water to the cleaning pad, based on a result of comparing the instantaneous load value with the average load value obtained by accumulating the instantaneous load values over time. For example, the driving robot apparatus may supply water to the cleaning pad, based on a result of identifying the instantaneous load value as being lower than the average load value.

In operation S1190, the driving robot apparatus starts traveling and cleaning.

The driving robot apparatus may start traveling based on a result of identifying that the cleaning performance of the driving robot apparatus may be exhibited because the cleaning pad contains a sufficient amount of water. For example, the driving robot apparatus may start traveling based on a result of comparing the instantaneous load value of the rotary motor with the reference load value. The reference load value is a load value of the rotary motor corresponding to the reference water content, which is water content at which the cleaning performance of the driving robot apparatus may be exhibited.

The driving robot apparatus may start traveling in and cleaning the traveling area at a place (e.g., the docking station or the floor) where the driving robot apparatus receives the command in operation S1110. The driving robot apparatus may travel in and clean the driving area according to the command received in operation S1110.

According to an embodiment of the disclosure, the driving robot apparatus may improve the cleaning performance by easily identifying the water content of the cleaning pad and supplying water to the cleaning pad.

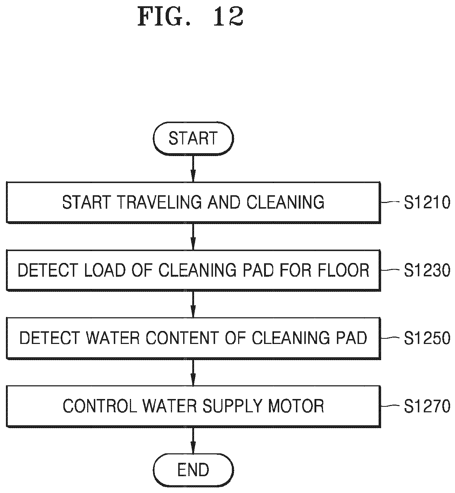

FIG. 12 is a flowchart of a control method of a driving robot apparatus, according to an embodiment of the disclosure.

Each operation of the control method of FIG. 12 may be configured with one or more instructions to be executed by the driving robot apparatus, and may be stored in a recording medium.

In operation S1210, the driving robot apparatus starts traveling and cleaning. The driving robot apparatus may perform cleaning by using a cleaning pad while traveling. For example, the driving robot apparatus may clean a certain area with a wet mop while traveling in a certain area, based on a user input received through an input/output interface. As another example, the driving robot apparatus may travel in and cleans a certain area based on a control signal received from an external device (e.g., a server, a mobile terminal, etc.) through a communication interface. As another example, the driving robot apparatus may travel in and clean a certain area based on a control signal for starting traveling and cleaning at a preset time.

The driving robot apparatus may depart from the docking station based on a result of identifying whether the water content of the cleaning pad in the docking station is greater than or equal to the reference water content. Even when the water content of the cleaning pad is equal, the load value of the rotary motor of the driving robot apparatus may vary according to the material of the floor of the traveling area. For example, in the case of an uneven floor, the load value of the rotary motor is identified as high, and in the case of a uniform and smooth floor, the load value of the rotary motor is identified as low. Because the load value of the rotary motor of the driving robot apparatus is constantly identified in the pad holder of the docking station, the driving robot apparatus may identify the water content of the cleaning pad by using the load value obtained in the docking station.

In operation S1230, the driving robot apparatus detects the load of the cleaning pad for the floor.

The driving robot apparatus may obtain the load value of the rotary motor for the floor immediately after departing from the docking station. The water content of the cleaning pad identified in the docking station when the driving robot apparatus starts is equal to the water content of the cleaning pad on the floor immediately after the driving robot apparatus starts. That is, in operation S1210, when the water content of the cleaning pad of the driving robot apparatus satisfies the reference water content, the driving robot apparatus departs from the docking station, and thus, the water content of the cleaning pad on the floor immediately after the driving robot apparatus starts satisfies the reference water content. Therefore, by obtaining the load value of the rotary motor for the floor immediately after the driving robot apparatus departs from the docking station, the load value of the rotary motor for the floor may be matched with the reference water content of the cleaning pad. The driving robot apparatus may identify the material of the floor by using data in which the reference water content according to the material of the floor matches the load value of the rotary motor. The data in which the reference water content according to the material of the floor matches the load value of the rotary motor may be previously stored in a memory of the driving robot apparatus and/or a cloud server.

In operation S1250, the driving robot apparatus detects the water content of the cleaning pad.

The driving robot apparatus may identify the water content of the cleaning pad while traveling. For example, the driving robot apparatus may identify the water content of the cleaning pad by using the instantaneous load value of the rotary pad identified during traveling. The driving robot apparatus may identify the water content of the cleaning pad, based on a result of comparing the instantaneous load value of the rotary motor while traveling with the average load value obtained by accumulating the instantaneous load values over time. In this case, the driving robot apparatus may perform comparison with the average load value by using the standard deviation of the instantaneous load value.

The driving robot apparatus may identify the water content corresponding to the instantaneous load value of the cleaning pad by using the data in which the water content according to the material of the floor matches the load value of the rotary motor. The data in which the water content according to the material of the floor matches the load value of the rotary motor may be previously stored in a memory of the driving robot apparatus and/or a cloud server.

In operation S1270, the driving robot apparatus controls the water supply motor.

The driving robot apparatus may supply water to the cleaning pad, based on the water content of the cleaning pad identified in operation S1250. For example, the driving robot apparatus may control the water supply motor to supply water to the cleaning pad, based on a result of comparing the instantaneous load value of the rotary motor obtained in operation S1250 with a reference load value. The reference load value of the driving robot apparatus may be the load value of the rotary motor for the floor immediately after departing from the docking station, which is obtained in operation S1230.

The driving robot apparatus may supply water to the cleaning pad, based on a result of identifying that the standard deviation of the instantaneous load value of the rotary motor while traveling is lower than a threshold value. The driving robot apparatus may supply water to the cleaning pad, based on a result of comparing the instantaneous load value with the average load value obtained by accumulating the instantaneous load values over time. For example, the driving robot apparatus may supply water to the cleaning pad, based on a result of identifying the instantaneous load value as being lower than the average load value.

The driving robot apparatus may supply water to the cleaning pad, based on the difference between the reference water content and the water content of the cleaning pad identified in operation S1250. The driving robot apparatus may control the water supply motor to supply a shortage of the reference water content to the cleaning pad.

The driving robot apparatus may supply water to the cleaning pad while traveling. The driving robot apparatus may identify an area where the driving robot apparatus has traveled while supplying water to the cleaning pad. The driving robot apparatus may adjust the traveling path of the driving robot apparatus based on the area where the driving robot apparatus has traveled while supplying water. For example, the driving robot apparatus may adjust the traveling path so as to re-clean the identified area when traveling near the area where the driving robot apparatus has traveled while supplying water. When the driving robot apparatus finishes cleaning the traveling area, the driving robot apparatus may adjust the traveling path so as to re-clean the area where the driving robot apparatus has traveled while supplying water.

According to an embodiment of the disclosure, the driving robot apparatus may easily identify the water content of the cleaning pad, may adjust the traveling path according to the water content of the cleaning pad, and may control the water supply.

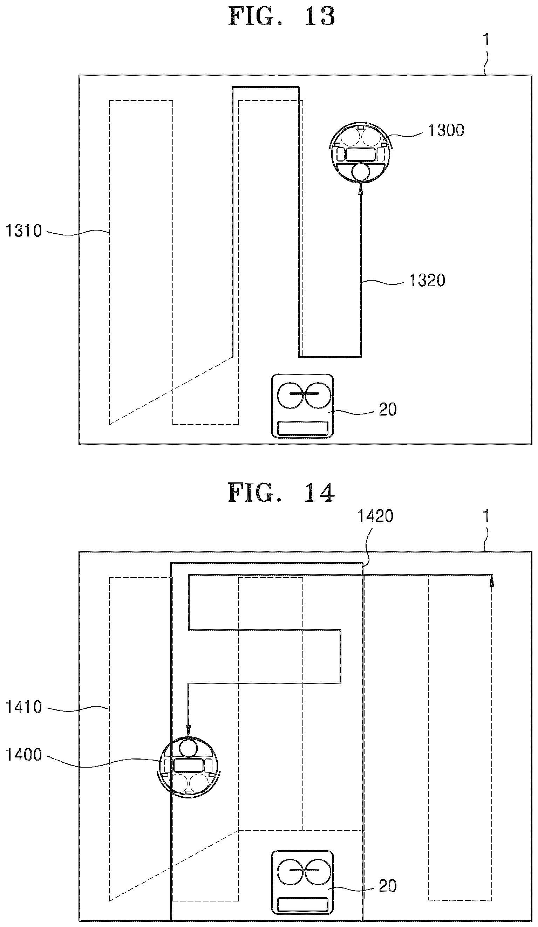

FIG. 13 is a diagram illustrating an operation by which a driving robot apparatus adjusts a traveling path, according to an embodiment of the disclosure, and FIG. 14 is a diagram illustrating an operation by which a driving robot apparatus adjusts a traveling path, according to an embodiment of the disclosure.

Referring to FIGS. 13 and 14, driving robot apparatuses 1300 and 1400 according to an embodiment of the disclosure may depart from a docking station 20 and clean a traveling area 1 along the traveling paths 1310 and 1410, respectively. The traveling area 1 may be defined according to a certain criterion while the driving robot apparatuses 1300 and 1400 start operating, or may be set in advance by a designer or a user.

The driving robot apparatuses 1300 and 1400 may identify water content of a cleaning pad in the docking station 20. The driving robot apparatuses 1300 and 1400 may identify a load value of a rotary motor for the floor immediately after departing from the docking station 20.

The driving robot apparatuses 1300 and 1400 may identify the water content of the cleaning pad while traveling. The driving robot apparatuses 1300 and 1400 may identify the water content of the cleaning pad from an instantaneous load value obtained while traveling, based on the load value of the rotary motor for the floor immediately after the driving robot apparatuses 1300 and 1400 depart from the docking station 20.

The driving robot apparatuses 1300 and 1400 may supply water to the cleaning pad when the water content of the cleaning pad is less than a reference water content. The driving robot apparatuses 1300 and 1400 may supply water to the cleaning pad while traveling. For example, the driving robot apparatuses 1300 and 1400 may supply water to the cleaning pad, based on a result of comparing the instantaneous load value of the rotary motor obtained while traveling with a reference load value. The reference load value of the driving robot apparatuses 1300 and 1400 may be the load value of the rotary motor for the floor immediately after departing from the docking station 20. As another example, the driving robot apparatuses 1300 and 1400 may supply water to the cleaning pad, based on a result of identifying that the standard deviation of the instantaneous load value of the rotary motor while traveling is lower than a threshold value. As another example, the driving robot apparatuses 1300 and 1400 may supply water to the cleaning pad, based on a result of identifying that the instantaneous load value is lower than the average load value obtained by accumulating the instantaneous load values over time. As another example, the driving robot apparatuses 1300 and 1400 may supply water to the cleaning pad, based on the difference in the water content of the cleaning pad identified based on the reference water content and the instantaneous load value. The driving robot apparatuses 1300 and 1400 may control the water supply motor to supply a shortage of the reference water content to the cleaning pad.

Because the cleaning pads of the driving robot apparatuses 1300 and 1400 require time for water to permeate even when water is supplied, the water content of the cleaning pads does not immediately increase. Accordingly, the driving robot apparatuses 1300 and 1400 may re-clean an area where water is supplied to the cleaning pad.

The driving robot apparatuses 1300 and 1400 may identify an area where the driving robot apparatuses 1300 and 1400 have traveled while supplying water to the cleaning pads. For example, the driving robot apparatuses 1300 and 1400 may identify an area where the driving robot apparatuses 1300 and 1400 have traveled while supplying water to the cleaning pad within an indoor space map, such as a navigation map, a simultaneous localization and mapping (SLAM) map, and an obstacle recognition map.

The driving robot apparatuses 1300 and 1400 may adjust the traveling paths of the driving robot apparatuses 1300 and 1400 based on the area where the driving robot apparatuses 1300 and 1400 have traveled while supplying water.

For example, the driving robot apparatus 1300 may adjust the traveling path 1320 so as to re-clean when the driving robot apparatus 1300 travels in the vicinity of a first area where the driving robot apparatus 1300 has traveled while supplying water. When traveling near the first area, the driving robot apparatus 1300 may adjust the traveling path 1320 so as to travel inside the first area. The driving robot apparatus 1300 may travel in a zigzag and/or spiral manner in the first area along the traveling path 1320. The driving robot apparatus 1300 may travel along the traveling path 1310 when the traveling inside the first area is completed.

As another example, when the driving robot apparatus 1400 finishes cleaning the traveling area 1, the driving robot apparatus 1400 may adjust a traveling path 1420 so as to re-clean a second area where the driving robot apparatus 1400 has traveled while supplying water. When the driving robot apparatus 1400 arrives at the end point of the traveling path 1410, the driving robot apparatus 1400 may add the traveling path 1420 so as to travel inside the second area. The driving robot apparatus 1400 may travel in a zigzag and/or spiral manner in the second area along the traveling path 1420. The driving robot apparatus 1400 may return to the docking station 20 when the traveling inside the second area is completed.

According to an embodiment of the disclosure, the driving robot apparatus may easily identify the water content of the cleaning pad, may adjust the traveling path according to the water content of the cleaning pad, and may control the water supply.

A machine-readable storage medium may be provided in the form of a non-transitory storage medium. The "non-transitory storage medium" is a tangible device and only means not including a signal (e.g., electromagnetic wave). This term does not distinguish between a case where data is semi-permanently stored in a storage medium and a case where data is temporarily stored in a storage medium. For example, the non-transitory storage medium may include a buffer in which data is temporarily stored.

According to an embodiment of the disclosure, the methods according to various embodiments of the disclosure disclosed herein may be provided by being included in a computer program product. The computer program products may be traded between a seller and a buyer as commodities. The computer program product may be distributed in the form of a machine-readable storage medium (e.g., compact disc read only memory (CD-ROM)), or may be distributed (e.g., downloaded or uploaded) online either via an application store or directly between two user devices (e.g., smartphones). In the case of the online distribution, at least a part of a computer program product (e.g., downloadable app) is stored at least temporarily on a machine-readable storage medium, such as a server of a manufacturer, a server of an application store, or a memory of a relay server, or may be temporarily generated.

## Claims

1. A method of controlling a driving robot apparatus (10), the method comprising:
obtaining, via a sensor (14), a load value of a rotary motor (410) of the driving robot apparatus (10) as the rotary motor (410) rotates a holder (430);
identifying water content of a cleaning pad (450) fixed to the holder (430), based on the load value of the rotary motor (410); and
controlling a cleaning assembly (330) to supply water to the cleaning pad (450) fixed to the holder (430), based on the load value of the rotary motor (410),
**characterized in that** the obtaining of the load value of the rotary motor includes:
controlling the sensor to obtain an instantaneous load value of the rotary motor while the driving robot apparatus is traveling, and
obtaining an average load value of the rotary motor via the sensor while the driving robot apparatus is traveling; and
the controlling of the cleaning assembly includes:
controlling the cleaning assembly to supply the water to the cleaning pad fixed to the holder, based on comparing the instantaneous load value with the average load value.

2. The control method of claim 1, wherein
the controlling of the cleaning assembly includes:
obtaining a standard deviation of the instantaneous load value, and
controlling the cleaning assembly to supply the water to the cleaning pad fixed to the holder, based on comparing the standard deviation with a threshold value.

3. The control method of claim 1 or 2, further comprising:
identifying an area where the driving robot apparatus travels while supplying the water to the cleaning pad fixed to the holder; and
adjusting a traveling path of the driving robot apparatus based on the identified area.

4. The control method of any one of claims 1 to 3, wherein
the obtaining of the load value of the rotary motor includes:
controlling the sensor to obtain a first load value of the rotary motor while the driving robot apparatus is in a docking station (700),
wherein a protrusion (715) is included in an area of the docking station where the cleaning pad fixed to the holder is located, and
the controlling of the cleaning assembly includes:
controlling the cleaning assembly to supply the water to the cleaning pad fixed to the holder, based on comparing the first load value with a reference load value.

5. The control method of claim 4, further comprising:
controlling a moving assembly (310) so that the driving robot apparatus departs from the docking station, based on comparing the first load value with the reference load value.

6. The control method of claim 5, further comprising:
controlling the sensor to obtain a second load value of the rotary motor immediately after the driving robot apparatus departs from the docking station;
controlling the sensor to obtain a third load value of the rotary motor while the driving robot apparatus is traveling; and
controlling the cleaning assembly to supply the water to the cleaning pad fixed to the holder, based on comparing the second load value with the third load value.

7. The control method of any one of claims 4 to 6, wherein
the protrusion has different slopes on both respective sides of the protrusion, and the obtaining of the first load value of the rotary motor includes:
controlling the rotary motor so that the cleaning pad fixed to the holder rotates in a direction in which the cleaning pad fixed to the holder travels along a high slope of the different slopes of the protrusion.

8. The control method of claim 7, wherein
the protrusion includes:
a central protrusion (715, 831), and
one or more wing protrusions (833) located at both ends of the central protrusion, and
the high slope of the different slopes of the protrusion is located on one side of the central protrusion.

9. A computer-readable recording medium having recorded thereon a computer program for causing a computer to perform the method of claim 1.

10. A driving robot apparatus (10, 300) comprising:
a moving assembly (11, 310);
a cleaning assembly (12, 330) including:
a holder (430) to which a cleaning pad (450) is fixable, and
a rotary motor (410) configured to rotate the holder (430);
a sensor (14, 340) configured to detect a load of the rotary motor (410) while the rotary motor (410) is rotating the holder (430); and
a processor (19, 390) configured to:
obtain a load value of the rotary motor (410) by using the sensor (14, 340),
identify water content of a cleaning pad (450) fixed to the holder (430), based on the load value of the rotary motor (410), and
control the cleaning assembly (12, 330) to supply water to the cleaning pad (450) fixed to the holder (430), based on the load value of the rotary motor (410),
**characterized in that** the processor (19, 390) is further configured to:
control the sensor (14, 340) to obtain an instantaneous load value of the rotary motor (410) while the driving robot apparatus (10) is traveling,
obtain an average load value of the rotary motor (410) via the sensor (14, 340) while the driving robot apparatus (10) is traveling, and
control the cleaning assembly (12, 330) to supply the water to the cleaning pad (450) fixed to the holder (430), based on comparing the instantaneous load value with the average load value.

11. The driving robot apparatus of claim 10, wherein
the processor is further configured to:
obtain a standard deviation of the instantaneous load value, and
control the cleaning assembly to supply the water to the cleaning pad fixed to the holder, based on comparing the standard deviation with a threshold value.

12. The driving robot apparatus of claim 10 or 11, wherein
the processor is further configured to:
identify an area where the driving robot apparatus travels while supplying the water to the cleaning pad fixed to the holder, and
adjust a traveling path of the driving robot apparatus, based on the identified area.

13. The driving robot apparatus of any one of claims 10 to 12, wherein
the processor is further configured to:
control the sensor to obtain a first load value of the rotary motor while the driving robot apparatus is in a docking station (700),
wherein a protrusion (715) is included in an area of the docking station where the cleaning pad fixed to the holder is located, and
control the cleaning assembly to supply the water to the cleaning pad fixed to the holder, based on a result of comparing the first load value with a reference load value.

## Patentansprüche

1. Verfahren zur Steuerung einer Fahrrobotervorrichtung (10), wobei das Verfahren umfasst:
Erhalten, über einen Sensor (14), eines Lastwerts eines Drehmotors (410) der Fahrrobotervorrichtung (10), da der Drehmotor (410) einen Halter (430) dreht;
Identifizieren des Wassergehalts eines an dem Halter (430) befestigten Reinigungspads (450), basierend auf dem Lastwert des Drehmotors (410); und
Steuern einer Reinigungsanordnung (330), um dem an dem Halter (430) befestigten Reinigungspad (450) Wasser zuzuführen, basierend auf dem Lastwert des Drehmotors (410), **dadurch gekennzeichnet, dass** das Erhalten des Lastwerts des Drehmotors beinhaltet:
Steuern des Sensors, um einen momentanen Lastwert des Drehmotors zu erhalten, während die Fahrrobotervorrichtung fährt, und
Erhalten eines durchschnittlichen Lastwerts des Drehmotors über den Sensor, während die Fahrrobotervorrichtung fährt; und
das Steuern der Reinigungsanordnung beinhaltet:
Steuern der Reinigungsanordnung, um dem an dem Halter befestigten Reinigungspad Wasser zuzuführen, basierend auf dem Vergleichen des momentanen Lastwerts mit dem durchschnittlichen Lastwert.

2. Steuerungsverfahren nach Anspruch 1, wobei
das Steuern der Reinigungsanordnung beinhaltet:
Erhalten einer Standardabweichung des momentanen Lastwerts, und
Steuern der Reinigungsanordnung, um dem an dem Halter befestigten Reinigungspad Wasser zuzuführen, basierend auf dem Vergleichen der Standardabweichung mit einem Schwellenwert.

3. Steuerungsverfahren nach Anspruch 1 oder 2, ferner umfassend:
Identifizieren eines Bereichs, wo sich die Fahrrobotervorrichtung bewegt, während dem an dem Halter befestigten Reinigungspad Wasser zugeführt wird; und
Einstellen eines Fahrwegs der Fahrrobotervorrichtung basierend auf dem identifizierten Bereich.

4. Steuerungsverfahren nach einem der Ansprüche 1 bis 3, wobei das Erhalten des Lastwerts des Drehmotors beinhaltet:
Steuern des Sensors, um einen ersten Lastwert des Drehmotors zu erhalten, während die Fahrrobotervorrichtung in einer Andockstation (700) ist,
wobei ein Vorsprung (715) in einem Bereich der Andockstation beinhaltet ist, wo sich der an dem Halter befestigte Reinigungspad befindet, und das Steuern der Reinigungsanordnung beinhaltet:
Steuern der Reinigungsanordnung, um dem an dem Halter befestigten Reinigungspad Wasser zuzuführen, basierend auf dem Vergleichen des ersten Lastwerts mit einem Referenzlastwert.

5. Steuerungsverfahren nach Anspruch 4, ferner umfassend:
Steuern einer beweglichen Anordnung (310), sodass die Fahrrobotervorrichtung von der Andockstation abfährt, basierend auf dem Vergleichen des ersten Lastwerts mit dem Referenzlastwert.

6. Steuerungsverfahren nach Anspruch 5, ferner umfassend:
Steuern des Sensors, um einen zweiten Lastwert des Drehmotors, unmittelbar nach dem Abfahren der Fahrrobotervorrichtung von der Andockstation, zu erhalten;
Steuern des Sensors, um einen dritten Lastwert des Drehmotors zu erhalten, während die Fahrrobotervorrichtung fährt; und
Steuern der Reinigungsanordnung, um dem an dem Halter befestigten Reinigungspad Wasser zuzuführen, basierend auf dem Vergleichen des zweiten Lastwerts mit dem dritten Lastwert.

7. Steuerungsverfahren nach einem der Ansprüche 4 bis 6, wobei
der Vorsprung unterschiedliche Steigungen auf beiden jeweiligen Seiten des Vorsprungs aufweist und das Erhalten des ersten Lastwerts des Drehmotors beinhaltet:
Steuern des Drehmotors, sodass sich der an dem Halter befestigte Reinigungspad in einer Richtung dreht, in der sich der an dem Halter befestigte Reinigungspad entlang einer hohen Steigung der verschiedenen Steigungen des Vorsprungs bewegt.

8. Steuerungsverfahren nach Anspruch 7, wobei
der Vorsprung beinhaltet:
einen zentralen Vorsprung (715, 831) und
einen oder mehrere Flügelvorsprünge (833), die sich an beiden Enden des zentralen Vorsprungs befinden, und
sich die hohe Steigung der verschiedenen Steigungen des Vorsprungs auf einer Seite des zentralen Vorsprungs befindet.

9. Computerlesbares Aufzeichnungsmedium mit einem darauf aufgezeichneten Computerprogramm zum Bewirken, dass ein Computer das Verfahren nach Anspruch 1 durchführt.

10. Fahrrobotervorrichtung (10, 300), umfassend:
eine bewegliche Anordnung (11, 310);
eine Reinigungsanordnung (12, 330), beinhaltend:
einen Halter (430), an dem ein Reinigungspad (450) befestigbar ist, und
einen Drehmotor (410), der dazu konfiguriert ist, den Halter (430) zu drehen;
einen Sensor (14, 340), der dazu konfiguriert ist, eine Last des Drehmotors (410) zu detektieren, während der Drehmotor (410) den Halter (430) dreht; und
einen Prozessor (19, 390), der konfiguriert ist zum:
Erhalten eines Lastwerts des Drehmotors (410) unter Verwendung des Sensors (14, 340), Identifizieren des Wassergehalts eines an dem Halter (430) befestigten Reinigungspads (450), basierend auf dem Lastwert des Drehmotors (410), und
Steuern der Reinigungsanordnung (12, 330), um dem an dem Halter (430) befestigten Reinigungspad (450) Wasser zuzuführen, basierend auf dem Lastwert des Drehmotors (410),
**dadurch gekennzeichnet, dass** der Prozessor (19, 390) ferner konfiguriert ist zum:
Steuern des Sensors (14, 340), um einen momentanen Lastwert des Drehmotors (410) zu erhalten, während die Fahrrobotervorrichtung (10) fährt,
Erhalten eines durchschnittlichen Lastwerts des Drehmotors (410) über den Sensor (14, 340), während die Fahrrobotervorrichtung (10) fährt, und
Steuern der Reinigungsanordnung (12, 330), um dem an dem Halter (430) befestigten Reinigungspad (450) Wasser zuzuführen, basierend auf dem Vergleichen des momentanen Lastwerts mit dem durchschnittlichen Lastwert.

11. Fahrrobotervorrichtung nach Anspruch 10, wobei
der Prozessor ferner konfiguriert ist zum:
Erhalten einer Standardabweichung des momentanen Lastwerts, und
Steuern der Reinigungsanordnung, um dem an dem Halter befestigten Reinigungspad Wasser zuzuführen, basierend auf dem Vergleichen der Standardabweichung mit einem Schwellenwert.

12. Fahrrobotervorrichtung nach Anspruch 10 oder 11, wobei
der Prozessor ferner konfiguriert ist zum:
Identifizieren eines Bereichs, wo sich die Fahrrobotervorrichtung bewegt, während dem an dem Halter befestigten Reinigungspad Wasser zugeführt wird, und
Einstellen eines Fahrwegs der Fahrrobotervorrichtung, basierend auf dem identifizierten Bereich.

13. Fahrrobotervorrichtung nach einem der Ansprüche 10 bis 12, wobei
der Prozessor ferner konfiguriert ist zum:
Steuern des Sensors, um einen ersten Lastwert des Drehmotors zu erhalten, während die Fahrrobotervorrichtung in einer Andockstation (700) ist,
wobei ein Vorsprung (715) in einem Bereich der Andockstation beinhaltet ist, wo sich der an dem Halter befestigte Reinigungspad befindet, und
Steuern der Reinigungsanordnung, um dem an dem Halter befestigten Reinigungspad Wasser zuzuführen, basierend auf einem Ergebnis des Vergleichens des ersten Lastwerts mit einem Referenzlastwert.

## Revendications

1. Procédé de commande d'un appareil robot d'entraînement (10), le procédé comprenant :
l'obtention, par l'intermédiaire d'un capteur (14), d'une valeur de charge d'un moteur rotatif (410) de l'appareil robot d'entraînement (10) tandis que le moteur rotatif (410) fait tourner un support (430) ;
l'identification de la teneur en eau d'un tampon de nettoyage (450) fixé au support (430), sur la base de la valeur de charge du moteur rotatif (410) ; et
la commande d'un ensemble de nettoyage (330) pour fournir de l'eau au tampon de nettoyage (450) fixé au support (430), sur la base de la valeur de charge du moteur rotatif (410),
**caractérisé en ce que** l'obtention de la valeur de charge du moteur rotatif comprend :
la commande du capteur pour obtenir une valeur de charge instantanée du moteur rotatif pendant le déplacement de l'appareil robot d'entraînement, et
l'obtention d'une valeur de charge moyenne du moteur rotatif par l'intermédiaire du capteur pendant le déplacement de l'appareil robot d'entraînement ; et
la commande de l'ensemble de nettoyage comprend :
la commande de l'ensemble de nettoyage pour fournir de l'eau au tampon de nettoyage fixé au support, sur la base de la comparaison de la valeur de charge instantanée avec la valeur de charge moyenne.

2. Procédé de commande de la revendication 1,
la commande de l'ensemble de nettoyage comprend :
l'obtention d'un écart type de la valeur de charge instantanée, et
la commande de l'ensemble de nettoyage pour fournir de l'eau au tampon de nettoyage fixé au support, sur la base de la comparaison de l'écart type avec une valeur seuil.

3. Procédé de commande de la revendication 1 ou 2, comprenant en outre :
l'identification d'une zone où l'appareil robot d'entraînement se déplace tout en fournissant de l'eau au tampon de nettoyage fixé au support ; et
le réglage d'un trajet de déplacement de l'appareil robot d'entraînement sur la base de la zone identifiée.

4. Procédé de commande de l'une quelconque des revendications 1 à 3, ladite obtention de la valeur de charge du moteur rotatif comprenant :
la commande du capteur pour obtenir une première valeur de charge du moteur rotatif pendant que l'appareil robot d'entraînement est dans une station d'accueil (700),
une saillie (715) étant comprise dans une zone de la station d'accueil où se situe le tampon de nettoyage fixé au support, et
ladite commande de l'ensemble de nettoyage comprenant :
la commande de l'ensemble de nettoyage pour fournir de l'eau au tampon de nettoyage fixé au support, sur la base de la comparaison de la première valeur de charge avec une valeur de charge de référence.

5. Procédé de commande de la revendication 4, comprenant en outre :
la commande d'un ensemble mobile (310) afin que l'appareil robot d'entraînement s'éloigne de la station d'accueil, sur la base de la comparaison de la première valeur de charge avec la valeur de charge de référence.

6. Procédé de commande de la revendication 5, comprenant en outre :
la commande du capteur pour obtenir une deuxième valeur de charge du moteur rotatif immédiatement après que l'appareil robot d'entraînement s'éloigne de la station d'accueil ;
la commande du capteur pour obtenir une troisième valeur de charge du moteur rotatif pendant le déplacement de l'appareil robot d'entraînement ; et
la commande de l'ensemble de nettoyage pour fournir de l'eau au tampon de nettoyage fixé au support, sur la base de la comparaison de la deuxième valeur de charge avec la troisième valeur de charge.

7. Procédé de commande de l'une quelconque des revendications 4 à 6,
ladite saillie possédant des pentes différentes des deux côtés respectifs de la saillie, et ladite obtention de la première valeur de charge du moteur rotatif comprenant :
la commande du moteur rotatif afin que le tampon de nettoyage fixé au support tourne dans une direction dans laquelle le tampon de nettoyage fixé au support se déplace le long d'une pente élevée des différentes pentes de la saillie.

8. Procédé de commande de la revendication 7,
ladite saillie comprenant :
une saillie centrale (715, 831), et
une ou plusieurs saillies d'aile (833) situées aux deux extrémités de la saillie centrale, et
la pente élevée des différentes pentes de la saillie étant située sur un côté de la saillie centrale.

9. Support d'enregistrement lisible par ordinateur sur lequel est enregistré un programme informatique destiné à amener un ordinateur à réaliser le procédé de la revendication 1.

10. Appareil robot d'entraînement (10, 300) comprenant :
un ensemble mobile (11, 310) ;
un ensemble de nettoyage (12, 330) comprenant :
un support (430) auquel un tampon de nettoyage (450) peut être fixé, et
un moteur rotatif (410) configuré pour faire tourner le support (430) ;
un capteur (14, 340) configuré pour détecter une charge du moteur rotatif (410) pendant que le moteur rotatif (410) fait tourner le support (430) ; et
un processeur (19, 390) configuré pour :
obtenir une valeur de charge du moteur rotatif (410) à l'aide du capteur (14, 340),
identifier la teneur en eau d'un tampon de nettoyage (450) fixé au support (430), sur la base de la valeur de charge du moteur rotatif (410), et
commander l'ensemble de nettoyage (12, 330) pour fournir de l'eau au tampon de nettoyage (450) fixé au support (430), sur la base de la valeur de charge du moteur rotatif (410),
**caractérisé en ce que** le processeur (19, 390) est en outre configuré pour :
commander le capteur (14, 340) pour obtenir une valeur de charge instantanée du moteur rotatif (410) pendant le déplacement de l'appareil robot d'entraînement (10),
obtenir une valeur de charge moyenne du moteur rotatif (410) par l'intermédiaire du capteur (14, 340) pendant le déplacement de l'appareil robot d'entraînement (10), et
commander l'ensemble de nettoyage (12, 330) pour fournir de l'eau au tampon de nettoyage (450) fixé au support (430), sur la base de la comparaison de la valeur de charge instantanée avec la valeur de charge moyenne.

11. Appareil robot d'entraînement de la revendication 10,
ledit processeur étant en outre configuré pour :
obtenir un écart type de la valeur de charge instantanée, et
commander l'ensemble de nettoyage pour fournir de l'eau au tampon de nettoyage fixé au support, sur la base de la comparaison de l'écart type avec une valeur seuil.

12. Appareil robot d'entraînement de la revendication 10 ou 11,
ledit processeur étant en outre configuré pour :
identifier une zone où l'appareil robot d'entraînement se déplace tout en fournissant de l'eau au tampon de nettoyage fixé au support, et
régler un trajet de déplacement de l'appareil robot d'entraînement sur la base de la zone identifiée.

13. Appareil robot d'entraînement de l'une quelconque des revendications 10 à 12,
ledit processeur étant en outre configuré pour :
commander le capteur pour obtenir une première valeur de charge du moteur rotatif pendant que l'appareil robot d'entraînement est dans une station d'accueil (700),
une saillie (715) étant comprise dans une zone de la station d'accueil où se situe le tampon de nettoyage fixé au support, et
commander l'ensemble de nettoyage pour fournir de l'eau au tampon de nettoyage fixé au support, sur la base d'un résultat de la comparaison de la première valeur de charge avec une valeur de charge de référence.
